# EUROPEAN PATENT APPLICATION

(11) **EP 4 628 442 A1**
(43) Date of publication of application: **08.10.2025**
(21) Application number: 23897901.7
(22) Date of filing: 01.12.2023
(51) Int. Cl.: B66F 9/24

(54) **FORKLIFT, FORKLIFT CONTROL SYSTEM, WEIGHT DETECTION DEVICE, WEIGHT DETECTION METHOD, AND WEIGHT DETECTION PROGRAM**

(30) Priority: 02.12.2022 JP 2022193466; 02.12.2022 JP 2022193495; 27.01.2023 JP 2023010946; 27.01.2023 JP 2023011226; 02.02.2023 JP 2023014554; 02.02.2023 JP 2023014590; 03.02.2023 JP 2023015430
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2023/043090
(87) International publication number: WO 2024/117255

(57) **Abstract**

A forklift according to an embodiment includes a traveling vehicle body, a fork, and a sensor. The fork is provided in front of the traveling vehicle body, and has a recess at least at a distal end portion. The sensor is accommodated in the recess to detect a situation around the distal end portion.

## Description

### Field

Embodiments described herein relate generally to a forklift, a forklift control system, a weight detection device, a weight detection method, and a weight detection program.

### Background

Conventionally, there has been proposed a forklift that automatically controls a fork by capturing an image on a distal end side of the fork using a camera provided at a proximal end of the fork (see, for example, Patent Literature 1).

### Citation List

### Patent Literature

Patent Literature 1: JP 2022-17613 A

### Summary

### Technical Problem

However, in the conventional art, since an image is captured from the proximal end side of the fork, the fork itself is included in the captured image. Therefore, there is a possibility that the state at the distal end of the fork indicated by the captured image may be blocked by the fork.

The present invention has been made in view of the above, and an object thereof is to provide a forklift, a forklift control system, a weight detection device, a weight detection method, and a weight detection program capable of more accurately grasping a situation at a distal end of a fork.

### Solution to Problem

A forklift according to an embodiment includes a traveling vehicle body, a fork, and a sensor. The fork is provided in front of the traveling vehicle body, and has a recess at least at a distal end portion. The sensor is accommodated in the recess to detect a situation around the distal end portion.

### Advantageous Effects of Invention

According to one aspect of the embodiment, it is possible to more accurately grasp a situation at the distal end of the fork.

### Brief Description of Drawings

FIG. 1 is a schematic side view of a forklift according to a first embodiment.
FIG. 2 is a view illustrating an example in which a situation detection sensor is installed.
FIG. 3 is a block diagram illustrating an example of a functional configuration of a control device.
FIG. 4 is a block diagram illustrating an example of a functional configuration of a weight detection device.
FIG. 5 is a diagram illustrating an example of associated information.
FIG. 6 is a flowchart illustrating processing procedures of processing executed by the control device according to the first embodiment.
FIG. 7 is a flowchart illustrating processing procedures of processing executed by the weight detection device according to the first embodiment.
FIG. 8 is a diagram illustrating an example in which a situation detection sensor is installed according to a modification of the first embodiment.
FIG. 9 is an example in which a situation detection sensor is installed according to a modification of the first embodiment.
FIG. 10 is a schematic side view of a forklift according to a second embodiment.
FIG. 11 is a view illustrating an example of a configuration of a window according to the second embodiment.
FIG. 12 is a view (part 1) illustrating an example in which a situation is detected at a distal end of a fork according to the second embodiment.
FIG. 13 is a view (part 2) illustrating an example in which a situation is detected at a distal end of a fork according to the second embodiment.
FIG. 14 is a view illustrating an example in which a width between forks is adjusted according to the second embodiment.
FIG. 15 is a view illustrating an example of a configuration of a window according to a modification of the second embodiment.
FIG. 16 is a view illustrating a control system for a forklift according to a third embodiment.
FIG. 17 is a view (part 1) illustrating a fork insertion hole detection unit according to the third embodiment.
FIG. 18 is a view (part 2) illustrating a fork insertion hole detection unit according to the third embodiment.
FIG. 19 is a view illustrating a fork insertion hole detection unit according to a first modification of the third embodiment.
FIG. 20 is a view illustrating a fork insertion hole detection unit according to a second modification of the third embodiment.
FIG. 21 is a view illustrating an outline of a forklift according to a fourth embodiment.
FIG. 22 is a view illustrating an example in which a situation is detected at a distal end of a fork according to the fourth embodiment.
FIG. 23 is a view illustrating another example in which a situation is detected at a distal end of a fork according to the fourth embodiment.
FIG. 24 is a flowchart illustrating examples of procedures of processing executed by a control device according to the fourth embodiment.
FIG. 25 is a schematic side view of a forklift according to a fifth embodiment.
FIG. 26 is a schematic plan view of the forklift according to the fifth embodiment.
FIG. 27 is a flowchart for explaining detection processing according to the fifth embodiment.
FIG. 28 is a view illustrating a state in which a fork according to a sixth embodiment is inclined upward.
FIG. 29 is a flowchart for explaining travel permission processing according to the sixth embodiment.
FIG. 30 is a diagram schematically illustrating an example of a hardware configuration of a computer that functions as a control device and/or a weight detection device.

### Description of Embodiments

Hereinafter, the present invention will be described through embodiments, but the following embodiments do not limit the invention according to the claims. In addition, not all combinations of features described in the embodiments are essential to the solution of the invention.

### (First Embodiment)

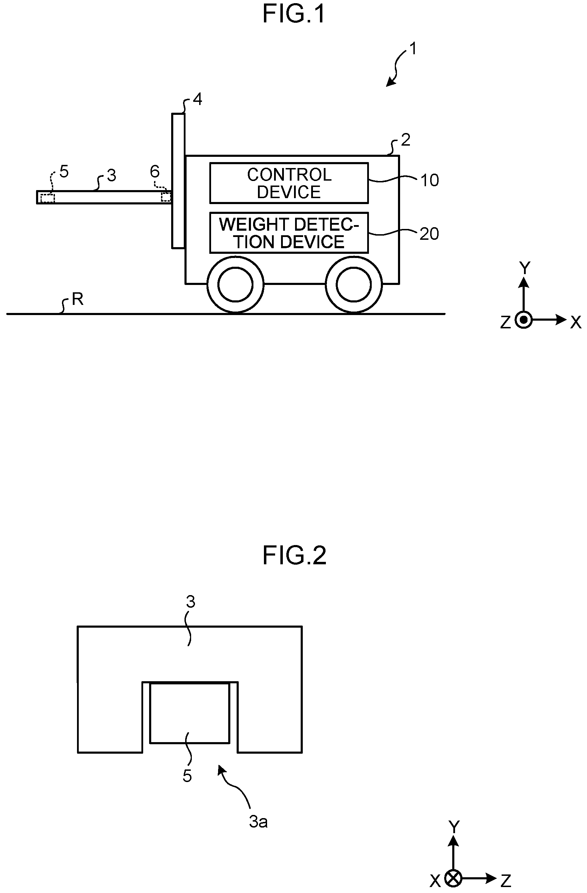

FIG. 1 is a schematic side view of a forklift 1 according to a first embodiment. The forklift 1 illustrated in FIG. 1 is a schematic view, and some components are omitted for convenience of explanation. The forklift 1 according to the present disclosure travels under automatic control. That is, the forklift 1 illustrated in the present disclosure transports a loaded object by automatic traveling in an unmanned manner. Note that the forklift 1 may be configured to manually travel in a manned manner, not limited to the unmanned automatic traveling. Alternatively, the forklift 1 may be configured to be switchable between an unmanned mode and a manned mode.

As illustrated in FIG. 1, the forklift 1 includes a traveling vehicle body 2, a fork 3, a lifting unit 4, a situation detection sensor 5, a load sensor 6, a control device 10, and a weight detection device 20.

The traveling vehicle body 2 is a vehicle body that travels on a road surface R of a warehouse or the like. The traveling vehicle body 2 travels on the road surface R by driving wheels in contact with the road surface R.

The fork 3 is a member on which a pallet carrying a loaded object is placed, and includes a pair of left and right members (that is, two members). The fork 3 is inserted into a fork insertion hole provided in the pallet and is lifted to transport the pallet.

The lifting unit 4 moves up and down the fork 3 under the control of the control device 10. Accordingly, the height position of the fork 3 can be changed.

The situation detection sensor 5 is provided at a distal end portion of the fork 3 to detect a situation around the distal end portion of the fork 3. The situation detection sensor 5 is, for example, a camera, a light detection and ranging (lidar), a radar device, or the like.

The load sensor 6 is a sensor that detects a load applied to the fork 3. When the pallet is placed on the fork 3, the load sensor 6 detects a total weight of the pallet and the loaded object as a load.

The control device 10 is a control device that controls the forklift 1 as a whole. Specifically, the control device 10 controls the wheels of the traveling vehicle body 2 to control automatic traveling on the road surface R. In addition, the control device 10 controls the lifting unit 4 to control the automatic lifting and lowering of the fork 3. Note that the configuration and the processing of the control device 10 will be described in detail later.

The weight detection device 20 detects weights of the pallet and the loaded object placed on the fork 3. Specifically, the weight detection device 20 detects a weight of the pallet, a weight of the loaded object, a weight of an exterior package of the loaded object, a weight of the content of the load, and the like. A method of detecting a weight by the weight detection device 20 will be described later.

Next, an example in which the situation detection sensor 5 is installed will be described with reference to FIG. 2. FIG. 2 is a view illustrating an example in which the situation detection sensor 5 is installed. FIG. 2 illustrates the fork 3 viewed from the distal end side toward the proximal end side (viewed from the negative direction of the X axis).

As illustrated in FIG. 2, the fork 3 has a recess 3a at least at a distal end portion. The situation detection sensor 5 is installed to be accommodated in the recess 3a. Specifically, the recess 3a of the fork 3 has a shape in which a portion on a side facing the road surface R on which the traveling vehicle body 2 travels (a side in the negative direction of the Y axis) is recessed. That is, the situation detection sensor 5 is installed on the side facing the road surface R of the fork 3. Accordingly, even when the pallet is placed on the fork 3, the situation detection sensor 5 can be prevented from coming into contact with the pallet.

As illustrated in FIG. 2, a depth (a length in the Y-axis direction) of the recess 3a is longer than a height (a length in the Y-axis direction) of the situation detection sensor 5. That is, a distal end of the recess 3a on the side facing the road surface R is closer to the road surface R than a distal end of the situation detection sensor 5 on the side facing the road surface. As a result, even when an object comes into contact with the fork 3 from the side facing the road surface R, it is possible to prevent the object from coming into contact with the situation detection sensor 5.

As illustrated in FIG. 1, a distal end of fork 3 is positioned ahead of the situation detection sensor 5 (on a size in the negative direction of the X axis). Accordingly, even when an object comes into contact with the fork 3 from the distal end, it is possible to prevent the object from coming into contact with the situation detection sensor 5.

In addition, by disposing the situation detection sensor 5 at the distal end of the fork 3, information about the fork 3 is not included in a detection result of the situation detection sensor 5 (the fork 3 is not shown in a captured image), and thus, a situation at the distal end of the fork can be grasped more accurately.

As a result, for example, even when the pallet is placed at a high position (a position higher than an eye level of a worker), the fork 3 can be accurately inserted into the pallet.

Note that the recess 3a may have a shape recessed only at a place where the situation detection sensor 5 is installed, or may have a shape recessed in the entire portion on the side facing the road surface R of the fork 3. In other words, the recess 3a may have a shape recessed from the distal end portion to a proximal end portion on a side facing the traveling vehicle body 2 of the fork 3. This makes it possible to adjust the position of the situation detection sensor 5 in the front-rear direction (X-axis direction).

Note that the recess 3a is not limited to being provided in the portion on the side facing the road surface R of the fork 3, and may have a shape in which the surface of the fork 3 on the front side (a side in the negative direction of the X axis) is recessed.

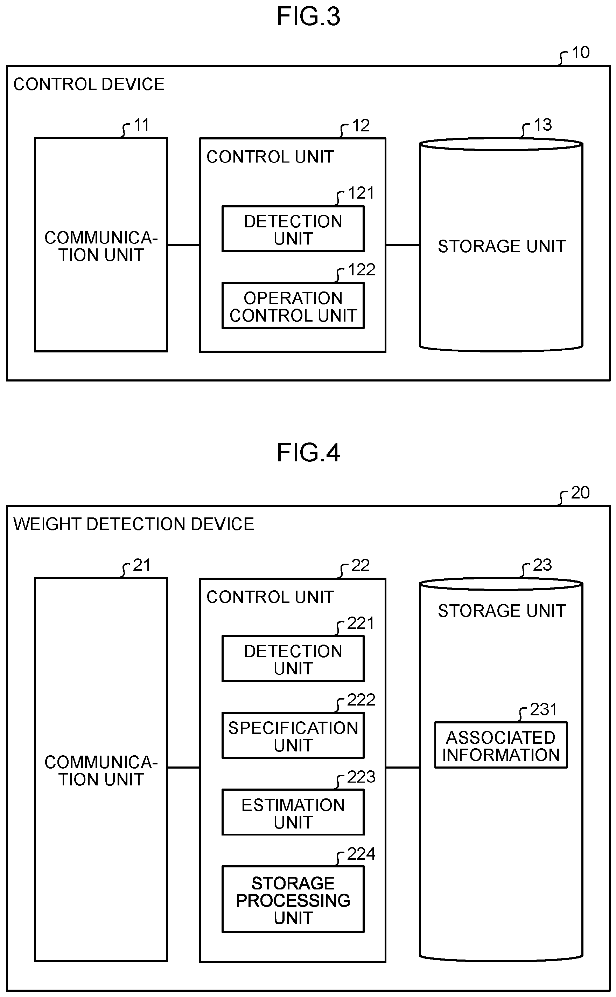

Next, examples of functional configurations of the control device 10 and the weight detection device 20 will be described with reference to FIGS. 3 and 4. FIG. 3 is a block diagram illustrating an example of a functional configuration of the control device 10. FIG. 4 is a block diagram illustrating an example of a functional configuration of the weight detection device 20.

First, an example of a functional configuration of the control device 10 will be described with reference to FIG. 3. As illustrated in FIG. 3, the control device 10 includes a communication unit 11, a control unit 12, and a storage unit 13. The control unit 12 includes a detection unit 121 and an operation control unit 122.

The communication unit 11 is realized by, for example, a network interface card (NIC) or the like. The communication unit 11 is connected to a network in a wired or wireless manner. For example, the communication unit 11 is communicably connected to a server device that manages the forklift 1.

The control unit 12 automatically controls the traveling vehicle body 2 and the fork 3 (the lifting unit 4) based on information detected by the situation detection sensor 5.

The detection unit 121 detects a situation around the distal end portion of the fork 3 based on the information detected by the situation detection sensor 5. For example, the detection unit 121 detects a captured image captured by the camera or information (position information or shape information) about a target detected by the lidar or the radar device as a surrounding situation.

In addition, the detection unit 121 detects a pallet existing around the forklift 1 based on the captured image and the information about the target. For example, the detection unit 121 detects the number of pallets and the positions of the pallets based on pattern matching using the captured image or shape information in the information about the target.

In addition, the detection unit 121 determines whether an object is loaded on the detected pallet. For example, the detection unit 121 determines whether an object is loaded on each pallet based on the pattern matching using the captured image or the shape information in the information about the target.

The operation control unit 122 automatically controls the traveling vehicle body 2 and the fork 3 based on information detected by the detection unit 121. For example, the operation control unit 122 specifies a pallet positioned closest to the forklift 1 among the pallets on which the objects are loaded, and performs automatic control with the specified pallet as a transport target. The pallet to be transported is not limited to the pallet positioned closest to the forklift 1, and may be a pallet existing in a specific area.

Specifically, the operation control unit 122 specifies the orientation of the pallet to be transported, and controls the traveling vehicle body 2 to move to a position where the front of the forklift 1 faces the front of the pallet. For example, in a case where the pallet has a rectangular shape in top view, the operation control unit 122 specifies one of the four sides constituting the rectangular shape as the front of the pallet. Subsequently, the operation control unit 122 specifies the position of the fork insertion hole of the pallet after moving to the front of the pallet. For example, the operation control unit 122 specifies the position of the fork insertion hole based on a captured image acquired by the detection unit 121 and shape information of the target (pallet).

Subsequently, the operation control unit 122 controls the lifting unit 4 to align the height position of the fork 3 with the specified position of the fork insertion hole, and then controls the traveling vehicle body 2 to insert the fork 3 into the fork insertion hole. Then, after inserting the fork 3 into the fork insertion hole, the operation control unit 122 controls the lifting unit 4 to lift the fork 3, thereby lifting the pallet. Then, the operation control unit 122 automatically calculates a route (e.g., the shortest route) to a target position where the pallet is to be placed. Then, the operation control unit 122 controls the traveling vehicle body 2 to move to the target position along the route, and after traveling vehicle body 2 arrives at the target position, the operation control unit 122 controls the lifting unit 4 to place the pallet at the target position. Then, after the pallet is placed, the operation control unit 122 specifies a pallet to be transported next and transport the pallet in sequence.

Next, an example of a functional configuration of the weight detection device 20 will be described with reference to FIG. 4. As illustrated in FIG. 4, the weight detection device 20 includes a communication unit 21, a control unit 22, and a storage unit 23. The control unit 22 includes a detection unit 221, a specification unit 222, an estimation unit 223, and a storage processing unit 224.

The communication unit 21 is realized by, for example, a network interface card (NIC) or the like. The communication unit 21 is connected to a network in a wired or wireless manner. For example, the communication unit 21 is communicably connected to a server device that manages the forklift 1. Note that the communication unit 11 and the communication unit 21 may be one communication unit shared by the control device 10 and the weight detection device 20.

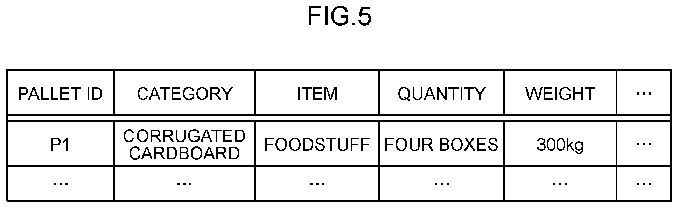

Associated information 231 stored in the storage unit 23 is information generated by the storage processing unit 224 to be described later. FIG. 5 is a diagram illustrating an example of the associated information 231. As illustrated in FIG. 5, the associated information 231 includes "pallet ID", "category", "item", "quantity", and "weight".

The "pallet ID" is identification information for identifying the pallet. The "category" is information indicating the type of the exterior package in the loaded object. The "item" is information indicating an item of the content. The "quantity" is information indicating a weight of the loaded object. The "weight" is information indicating a weight of the content.

The control unit 22 detects appearance information of the loaded object placed on the pallet to be inserted into the fork 3, specifies an exterior package other than the content in the loaded object based on the detected appearance information, and estimates a weight of the content based on the specified exterior package. As a result, the weight of the content can be detected from the weight or the like of the exterior package (e.g., corrugated cardboard or the like) accommodating the content in the loaded object.

The detection unit 221 detects appearance information of the loaded object placed on the pallet to be inserted into the fork 3. For example, the detection unit 221 detects, as the appearance information, a captured image captured by a camera that is the situation detection sensor 5, or shape information of the target detected by a lidar, a radar device, or the like that is the situation detection sensor 5.

In addition, the detection unit 221 detects (acquires), from the load sensor 6, a load applied to the fork 3 when the pallet is lifted by the fork 3. That is, the detection unit 221 detects the load from the load sensor as a total weight of the pallet and the loaded object.

In addition, the detection unit 221 detects a weight of the pallet. For example, the detection unit 221 detects the weight of the pallet by detecting weight information written on the pallet using the situation detection sensor 5 such as a camera. The weight information is, for example, code information in which information on the weight of the pallet is embedded. The code information is a two-dimensional code or a barcode. In addition to the code information, the weight information may be information in which the weight of the pallet is directly printed on the pallet.

The specification unit 222 specifies an exterior package other than the content in the loaded object based on the appearance information detected by the detection unit 221. For example, the specification unit 222 specifies the exterior package based on the captured image and the shape information of the target. The exterior package is, for example, a member that accommodates the content, such as corrugated cardboard, wrapping paper, a packaging material, a box, a case, or the like. In addition, the specification unit 222 specifies a category (a material such as corrugated cardboard) of the specified exterior package.

In addition, the specification unit 222 specifies loaded object information related to the loaded object based on the appearance information. The loaded object information specifies, for example, an item of the content and a quantity of the loaded object (such as the number of pieces of corrugated cardboard). For example, the specification unit 222 specifies the loaded object information based on the captured image and the shape information of the target. The item of the loaded object can be specified based on, for example, information printed on the corrugated cardboard which is an exterior package.

The estimation unit 223 estimates a weight of the content based on the specified exterior package. First, the estimation unit 223 estimates a weight of the specified exterior package. For example, the estimation unit 223 estimates the weight of the exterior package based on the size, material, and the like of the exterior package. Then, the estimation unit 223 estimates a weight of the content based on the estimated weight of the exterior package and the load detected by the load sensor 6. More specifically, the estimation unit 223 estimates the weight of the content by subtracting the weight of the pallet and the weight of the exterior package from the load. That is, the estimation unit 223 estimates, as the weight of the content, a weight obtained by subtracting the weight of the pallet and the weight of the exterior package from the load (the total weight of the pallet and the loaded object).

The storage processing unit 224 stores the loaded object information specified by the specification unit 222 and the weight of the content estimated by the estimation unit 223 in association with each other as the associated information 231 in the storage unit 23. Note that the object with which the loaded object information is associated by the storage processing unit 224 is not limited to the weight of the content, and may be the weight of the loaded object including the weight of the exterior package, and may also be the total weight of the pallet including the weight of the pallet. As a result, it is possible to eliminate work for the worker to write the weight of the loaded object (content) on paper for each pallet.

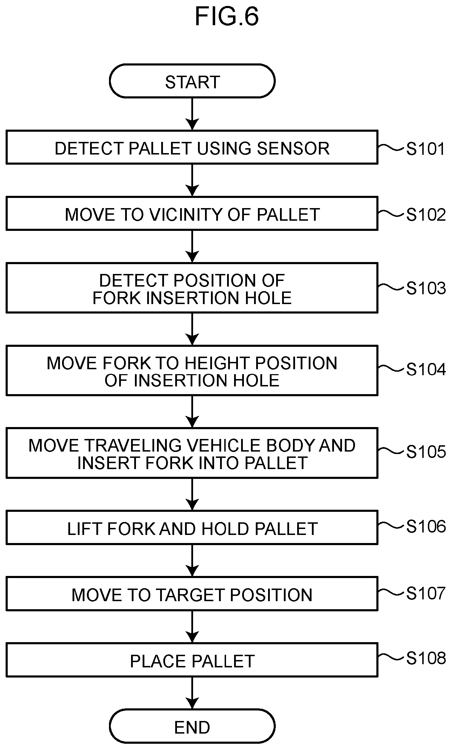

Next, processing procedures of processing executed by the control device 10 according to the first embodiment will be described with reference to FIG. 6. FIG. 6 is a flowchart illustrating processing procedures of processing executed by the control device 10 according to the first embodiment.

The control unit 12 detects a pallet using the situation detection sensor 5 (step S101). Subsequently, the control unit 12 controls the traveling vehicle body 2 to move the traveling vehicle body 2 to the vicinity of the pallet (step S102).

Subsequently, the control unit 12 detects a position of the fork insertion hole of the pallet (step S103), and controls the lifting unit 4 to move the fork 3 to a height position of the fork insertion hole (step S104).

Subsequently, the control unit 12 moves the traveling vehicle body 2 to insert the fork 3 into the pallet (step S105), and lifts the fork 3 by controlling the lifting unit 4 to lift the pallet (step S106).

Subsequently, the control unit 12 controls the traveling vehicle body 2 to move the pallet to the target position in a state where the pallet is lifted (step S107), controls the lifting unit 4 at the target position to lower the fork 3 to place the pallet (step S108), and ends the processing.

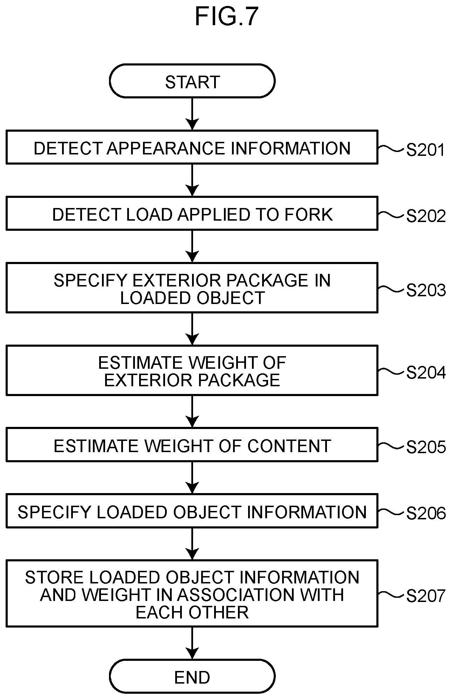

Next, processing procedures of processing executed by the weight detection device 20 according to the first embodiment will be described with reference to FIG. 7. FIG. 7 is a flowchart illustrating processing procedures of processing executed by the weight detection device 20 according to the first embodiment.

The control unit 22 detects appearance information of a loaded object placed on the pallet (step S201).

Subsequently, the control unit 22 detects a load applied to the fork 3 from the load sensor 6 in a state where the pallet is lifted by the fork 3 (step S202).

Subsequently, the control unit 22 specifies an exterior package in the loaded object based on the appearance information (step S203), and estimates a weight of the exterior package (step S204).

Subsequently, the control unit 22 estimates a weight of the content based on the load applied to the fork 3 and the weight of the exterior package (step S205). Subsequently, the control unit 22 specifies loaded object information related to the loaded object based on the appearance information (step S206).

Subsequently, the control unit 22 stores, in the storage unit 23, associated information 231 in which the specified loaded object information is associated with the estimated weight of the content (step S207), and ends the processing.

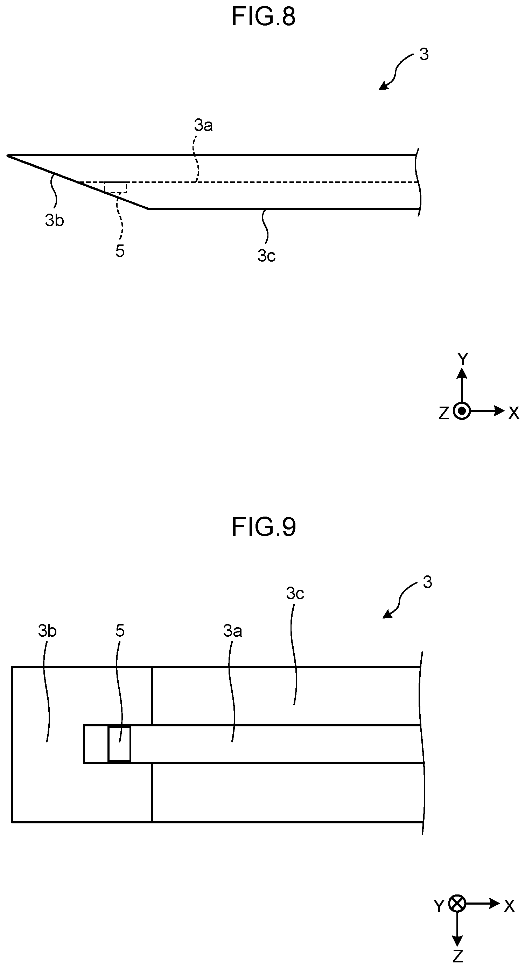

Next, an example in which the situation detection sensor 5 is installed in a case where the distal end portion of the fork 3 has a tapered shape will be described with reference to FIGS. 8 and 9. FIGS. 8 and 9 are views illustrating examples in which the situation detection sensor 5 is installed according to first and second modifications of the first embodiment. FIG. 8 is a side view of the distal end portion of the fork 3 as viewed from the side (in the positive direction of the Z axis), and FIG. 9 is a bottom view of the distal end portion of the fork 3 as viewed from the side facing the road surface R (in the negative direction of the Y axis).

As illustrated in FIGS. 8 and 9, the distal end portion of the fork 3 has an inclined surface 3b in a portion on the side facing the road surface R (a surface on a side in the negative direction of the Y axis) such that the fork 3 becomes thinner toward the distal end of the fork 3 (in the negative direction of the X axis). Specifically, the distal end portion of the fork 3 has an inclined surface 3b on a distal end side of the surface on the side facing the road surface R, and has a flat surface 3c on a proximal end side (a side in the positive direction of the X axis) of the surface on the side facing the road surface R. That is, the distal end portion of the fork 3 has a tapered shape at a portion corresponding to the inclined surface 3b, and the remaining portion of the fork 3 corresponding to the flat surface 3c has a uniform thickness (a length in the Y-axis direction). In other words, the distal end portion of the fork 3 has a gradient shape in which the surface on the side facing the road surface R is thinner than a surface on a side opposite to the side facing the road surface R (a surface in the positive direction of the Y axis) at the distal end of the fork 3.

The recess 3a is provided across the inclined surface 3b and the flat surface 3c. The recess 3a may be provided only on the inclined surface 3b out of the inclined surface 3b and the flat surface 3c. That is, the recess 3a has a shape in which at least a part of the inclined surface 3b is recessed.

Then, the situation detection sensor 5 is accommodated in the recess 3a at the position of the inclined surface 3b. In a case where the recess 3a is provided across the inclined surface 3b and the flat surface 3c, the situation detection sensor 5 may be accommodated in the recess 3a at the position of the flat surface 3c.

In this manner, by providing the recess 3a on the side facing the road surface R, the situation detection sensor 5 can be installed even if the distal end portion of the fork 3 has a tapered shape.

### (Second Embodiment)

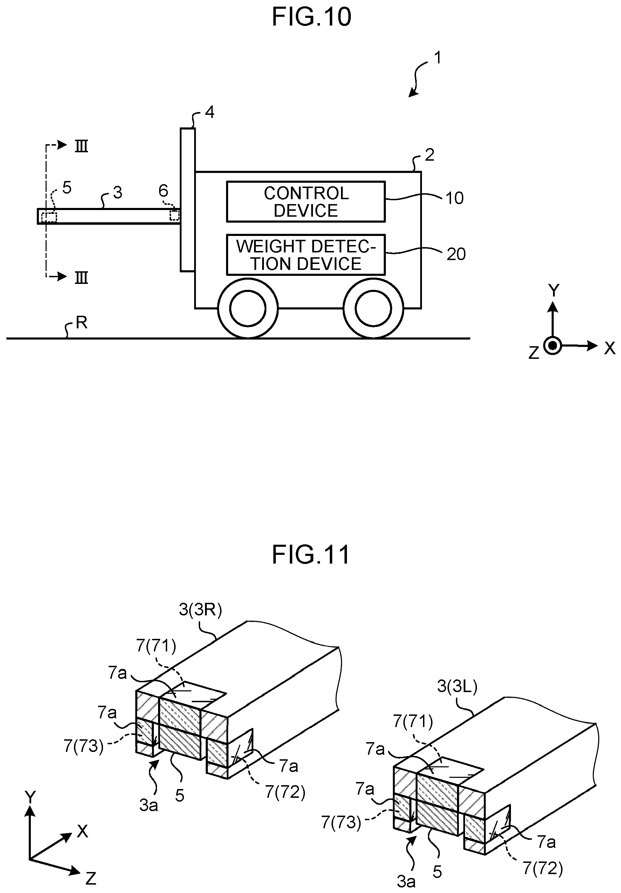

A forklift 1 according to the second embodiment will be described with reference to FIGS. 10 to 15. FIG. 10 is a schematic side view of the forklift 1 according to the second embodiment. The description of the configuration that is the same as that in the first embodiment will be omitted.

As illustrated in FIG. 10, the forklift 1 according to the second embodiment includes a traveling vehicle body 2, a fork 3, a lifting unit 4, a situation detection sensor 5, a load sensor 6, a control device 10, and a weight detection device 20. Since the traveling vehicle body 2, the fork 3, the lifting unit 4, the situation detection sensor 5, the load sensor 6, the control device 10, and the weight detection device 20 have the same configurations as those in the first embodiment, the description thereof will be omitted.

FIG. 11 is a view illustrating an example of a configuration of a window 7 according to the second embodiment. FIG. 11 illustrates a cross section taken along line III-III of FIG. 10. In addition, FIG. 11 illustrates a view of the fork 3 as viewed obliquely from below from the distal end side toward the proximal end side.

As illustrated in FIG. 11, the window 7 is formed at the distal end portion of the fork 3. The window 7 is formed to be open at the distal end portion of the fork 3 to communicate with the inside of the recess 3a. The window 7 is formed on at least one of an upper side and a lateral side of the situation detection sensor 5 disposed inside the recess 3a. In the second embodiment, windows 7 are formed on the upper side and the left and right sides (in the positive and negative directions of the Z axis) of the situation detection sensor 5.

According to such a configuration, the situation detection sensor 5 can detect situations above the fork 3 and to the sides of the fork 3 through the windows 7 formed to be open at the distal end portion of the fork 3. This makes it possible to more accurately grasp a situation at the distal end of the fork. In addition, since the situations above the fork 3 and to the sides of the fork 3 can be detected, the fork 3 can be accurately inserted into the fork insertion hole 8 of the pallet P. In addition, in a case where the windows are formed on the lateral sides of the situation detection sensor 5, it is easy to adjust the fork 3 in the width direction. In addition, since the windows 7 lighten the distal end portion of the fork 3, the weight of the fork 3 can be reduced.

Note that the window 7 is not limited to the configuration in which the window 7 is formed on each of the upper side and the left and right sides of the situation detection sensor 5, and may be formed, for example, only on the upper side of the situation detection sensor 5, or, for example, only on the outer lateral side that is one of the left and right sides of the situation detection sensor 5.

The window 7 is formed as a rectangular hole. The window 7 is not limited to the rectangular hole, and may be, for example, a circular or elliptical hole.

The window 7 is covered with a glass member 7a. The glass member 7a is, for example, a member made of transparent tempered glass. The glass member 7a is preferably colorless and transparent in a case where the situation detection sensor 5 is a camera. Note that the glass member 7a is not necessarily transparent in a case where the situation detection sensor 5 is a lidar or a radar device.

The glass member 7a is provided to correspond to the open (inner) shape of the window 7. In other words, the glass member 7a is provided to be filled in the window 7. Thus, the glass member 7a is substantially flush with the outer peripheral surface of the fork 3.

According to such a configuration, for example, even when the fork 3 is operated, it is possible to suppress damage to the situation detection sensor 5 due to an external force generated, for example, when the fork 3 comes into contact with the pallet P, and it is possible to suppress accumulation of dust or the like that has entered from the window 7 on the situation detection sensor 5. Accordingly, the durability of the situation detection sensor 5 can be enhanced.

In addition, since the glass member 7a is a member made of tempered glass, appropriate strength is ensured for the glass member 7a.

Note that the glass member 7a may be formed thinner than the thickness of the window 7, for example, inside the window 7. In addition, the glass member 7a may be thinner than the thickness of the window 7, and may be provided on the outermost side of the window 7 to be substantially flush with the outer peripheral surface of the fork 3. In this case, a glass member 7a of a window 71 provided on the upper side of the situation detection sensor 5 is substantially flush with the upper surface of the fork 3, and glass members 7a of windows 72 and 73 provided on the left and right sides of the situation detection sensor 5 are substantially flush with the left and right side surfaces of the fork 3, respectively.

In this case as well, since the glass member 7a is a member made of tempered glass, even if the glass member 7a is formed thinner than the thickness of the window 7, appropriate strength is ensured for the glass member 7a.

In addition, for example, in a case where a pair of left and right forks 3 are provided, the window 7 and the glass member 7a are provided on each of the left and right forks 3L and 3R.

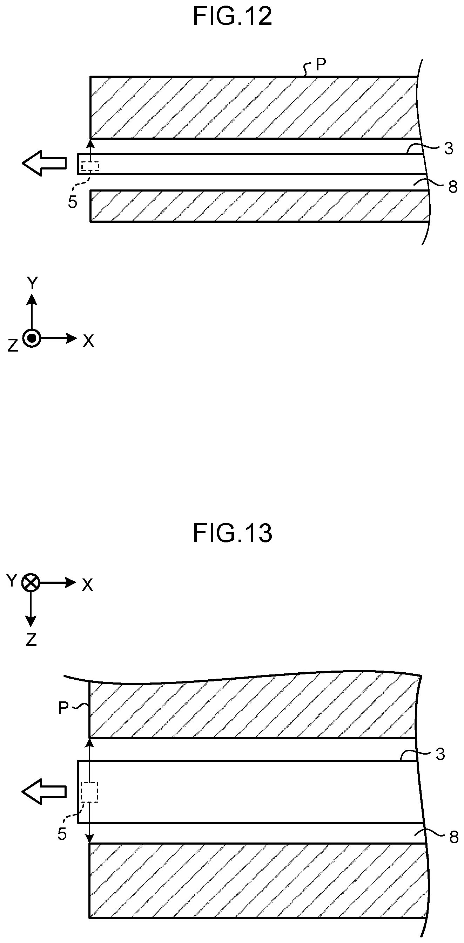

Next, an example in which a situation at the distal end of the fork is detected according to the second embodiment will be described with reference to FIGS. 12 and 13. FIGS. 12 and 13 are views illustrating an example in which a situation at the distal end of the fork is detected according to the second embodiment. FIG. 12 illustrates schematic cross sections of the pallet P and the fork 3 inserted into the fork insertion hole 8 of the pallet P as viewed from the side (as viewed from the positive direction of the Z axis). FIG. 13 illustrates schematic cross sections of the pallet P and the fork 3 inserted into the fork insertion hole 8 of the pallet P as viewed from above (as viewed from the positive direction of the Y axis).

As illustrated in FIGS. 12 and 13, in the forklift 1 (see FIG. 10), the fork 3 is inserted into the fork insertion hole 8 of the pallet P, and the situation detection sensor 5 detects whether the distal end portion of the fork 3 has reached an exit opposite to an entrance (insertion port) for the fork 3 (that is, whether the distal end portion of the fork 3 has come out of the fork insertion hole 8).

In this case, as illustrated in FIG. 12, the situation detection sensor 5 detects a situation above the fork 3, so that it is possible to detect that the distal end portion of the fork 3 has come out of the exit of the fork insertion hole 8. Furthermore, in this case, as illustrated in FIG. 13, the situation detection sensor 5 detects situations to the left and right sides of the fork 3, so that it is possible to detect that the distal end portion of the fork 3 has come out of the exit of the fork insertion hole 8.

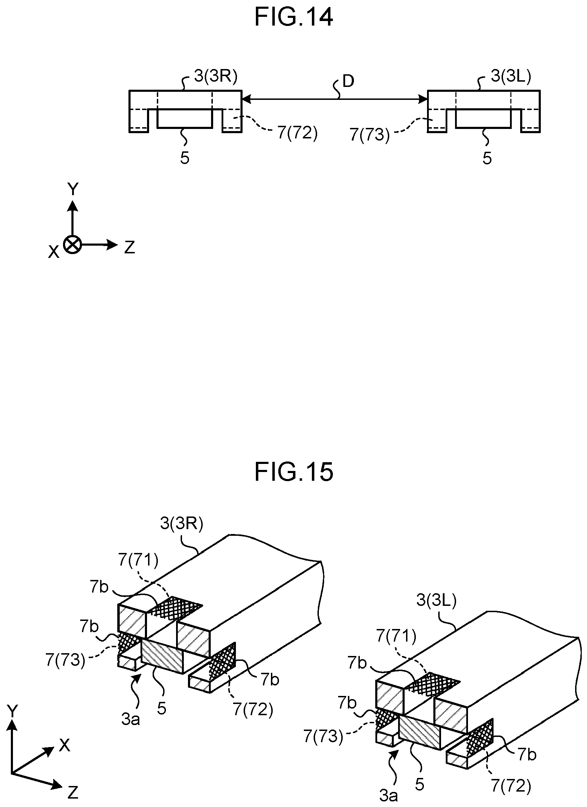

Next, an example in which a width D (lateral width) between the forks 3 is adjusted according to the second embodiment will be described with reference to FIG. 14. FIG. 14 is a diagram illustrating an example in which the width D between the forks 3 is adjusted according to the first embodiment. FIG. 14 illustrates the forks 3 viewed from the distal end side toward the proximal end side (viewed from the negative direction of the X axis).

As illustrated in FIG. 14, in the forklift 1 (see FIG. 10), windows 7 (72, 73) are formed in a plurality of forks 3, for example, on side surfaces facing each other of the pair of right and left forks 3 (3L, 3R) (inner side surfaces of the two forks 3L and 3R), so that the situation detection sensors 5 detect a lateral distance between the two forks 3L, 3R and adjusts the width D between the forks 3L and 3R.

In this case, the lateral distance between the two forks 3L and 3R may be detected by the situation detection sensor 5 of each of the two forks 3L and 3R, or the lateral distance between the two forks 3L and 3R may be detected by one of the situation detection sensors 5 of the two forks 3L and 3R.

According to such a configuration, since the two forks 3L and 3R can be adjusted in the width D direction, the fork 3 can be more accurately inserted into the fork insertion hole 8.

Next, a forklift according to a modification of the second embodiment will be described with reference to FIG. 15. FIG. 15 is a view illustrating an example of a configuration of a window 7 according to a modification of the second embodiment. Similarly to FIG. 11, FIG. 15 illustrates a cross section taken along line III-III of FIG. 10. FIG. 15 illustrates a view of the fork 3 as viewed obliquely from below from the distal end side toward the proximal end side.

The modification of the second embodiment to be described below is different from the second embodiment in a member covering the window 7 (a mesh member 7b to be described later). Therefore, in the following description, parts that are identical or equivalent to those in the second embodiment will be denoted by the same reference numerals, and the description of the parts that are identical or equivalent to those in the second embodiment may be omitted.

As illustrated in FIG. 15, in the second embodiment as well, the window 7 is formed at the distal end portion of the fork 3. The window 7 is formed to be open at the distal end portion of the fork 3 to communicate with the inside of the recess 3a. The window 7 is formed on at least one of an upper side and a lateral side of the situation detection sensor 5 disposed inside the recess 3a. In the modification of the second embodiment, windows 7 are formed on the upper side and the left and right sides (in the positive and negative directions of the Z axis) of the situation detection sensor 5.

According to such a configuration, the situation detection sensor 5 can detect situations above the fork 3 and to the sides of the fork 3 through the windows 7 formed to be open at the distal end portion of the fork 3. This makes it possible to more accurately grasp a situation at the distal end of the fork. In addition, since the situations above the fork 3 and to the sides of the fork 3 can be detected, the fork 3 can be accurately inserted into the fork insertion holes 8 (see FIGS. 12 and 13) of the pallet P (see FIGS. 12 and 13). In addition, in a case where the windows are formed on the lateral sides of the situation detection sensor 5, it is easy to adjust the width D (see FIG. 14) direction of the fork 3. In addition, since the windows 7 lighten the distal end portion of the fork 3, the weight of the fork 3 can be reduced.

Note that the window 7 is not limited to the configuration in which the window 7 is formed on each of the upper side and the left and right sides of the situation detection sensor 5, and may be formed, for example, only on the upper side of the situation detection sensor 5, or, for example, only on the outer lateral side that is one of the left and right sides of the situation detection sensor 5.

The window 7 is formed as a rectangular hole. The window 7 is not limited to the rectangular hole, and may be, for example, a circular or elliptical hole.

The window 7 is covered with a mesh member 7b having a mesh. The mesh member 7b is made of, for example, metal. The mesh member 7b may be made of a hard material (e.g., a hard synthetic resin) other than metal. In this case, engineering plastic or the like can be used as the mesh member 7b.

The mesh member 7b is provided to correspond to the open shape of the window 7. The mesh member 7b is substantially flush with the outer peripheral surface of the fork 3.

According to such a configuration, for example, even when the fork 3 is operated, it is possible to suppress damage to the situation detection sensor 5 due to an external force generated, for example, when the fork 3 comes into contact with the pallet P. Accordingly, the durability of the situation detection sensor 5 can be enhanced.

In addition, since the mesh member 7b is a metal member, appropriate strength is ensured for the mesh member 7b.

In addition, for example, in a case where a pair of left and right forks 3 are provided, the window 7 and the mesh member 7b are provided on each of the left and right forks 3L and 3R.

In the second embodiment and the modification of the second embodiment, the glass member 7a or the mesh member 7b is provided as a member for covering the window 7, but the member for covering the window 7 is not limited thereto, and may be, for example, a member made of an acrylic resin (acrylic member). Even when such an acrylic member is used, it is possible to suppress damage to the situation detection sensor 5 and accumulation of dust or the like on the situation detection sensor 5, and it is possible to enhance the durability of the situation detection sensor 5.

Note that the acrylic member needs to be transparent in a case where the situation detection sensor 5 is a camera, but is not necessarily transparent in a case where the situation detection sensor 5 is a lidar or a radar device.

In addition, in a case where the situation detection sensor 5 is a lidar or a radar device, for example, a member made of cloth (cloth member) through which light and radio waves are transmitted may be used as a member for covering the window 7. In this case, the cloth member is, for example, a resin-coated reinforced cloth. Therefore, appropriate strength is ensured for the cloth member. Even when such a cloth member is used, it is possible to suppress damage to the situation detection sensor 5 and accumulation of dust or the like on the situation detection sensor 5, and it is possible to enhance the durability of the situation detection sensor 5.

Furthermore, as a member for covering the window 7, a louver-shaped member (louver member) in which a plurality of plate members are arranged in parallel at predetermined intervals may be used. Since the gaps are formed in the louver member, even in a case where the situation detection sensor 5 is a camera, it is possible to detect situations above the fork and to the sides of the fork 3 through the gaps. Even when such a louver material is used, it is possible to suppress damage to the situation detection sensor 5 and accumulation of dust or the like on the situation detection sensor 5, and it is possible to enhance the durability of the situation detection sensor 5.

In a case where the louver member is used, if the opening and closing of the window 7 can be controlled by the louver member, the louver member can be controlled, for example, such that the window 7 is opened when the fork 3 is inserted into the fork insertion hole 8 of the pallet P, and the window 7 is closed otherwise.

### (Third Embodiment)

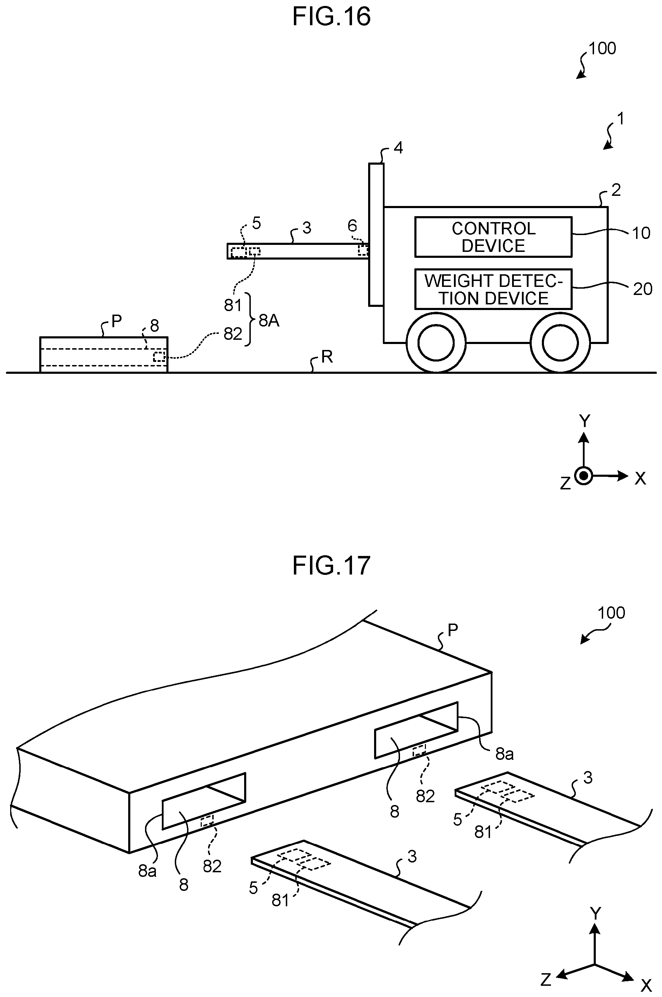

A forklift 1 according to the third embodiment will be described with reference to FIGS. 16 to 20. FIG. 16 is a view illustrating a control system for the forklift 1 according to the third embodiment. Note that the description of the configuration that is the same as that in each of the above-described embodiments will be omitted.

As illustrated in FIG. 16, a control system 100 for the forklift 1 includes the forklift 1, a control device 10, a pallet P, and a fork insertion hole detection unit 8A. The forklift 1 includes a traveling vehicle body 2, a fork 3, a lifting unit 4, a situation detection sensor 5, a load sensor 6, a control device 10, and a weight detection device 20. Since the traveling vehicle body 2, the fork 3, the lifting unit 4, the situation detection sensor 5, the load sensor 6, the control device 10, and the weight detection device 20 have the same configurations as those in the above-described embodiments, the description thereof will be omitted.

The fork insertion hole detection unit 8A detects the fork insertion hole 8. The fork insertion hole detection unit 8A includes a fork-side communication unit 81 and a pallet-side communication unit 82.

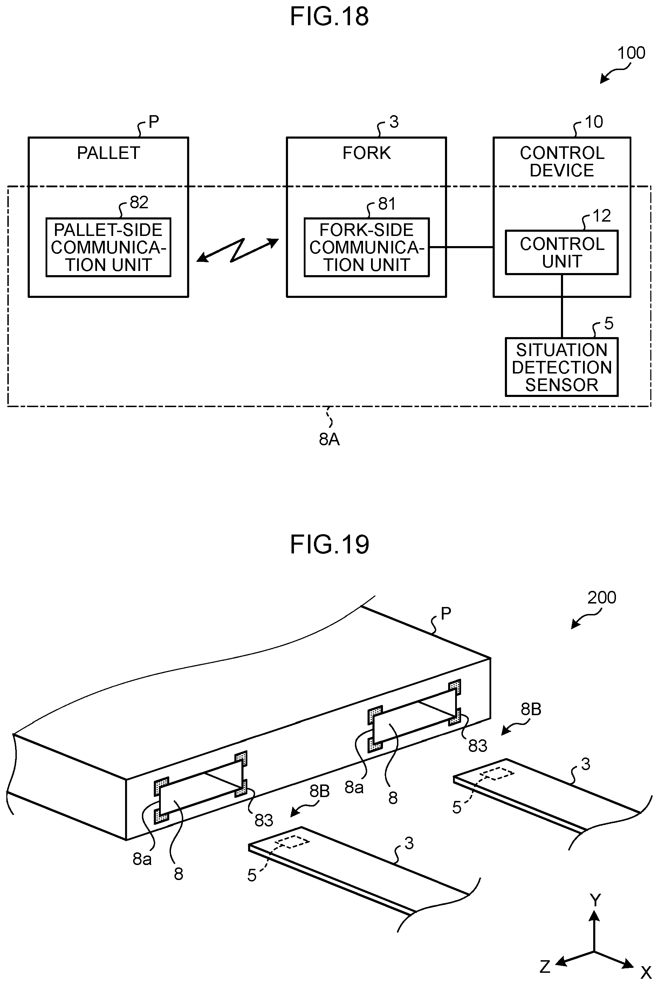

Next, the fork insertion hole detection unit 8A according to the third embodiment will be described with reference to FIGS. 17 and 18. FIGS. 17 and 18 are views illustrating the fork insertion hole detection unit 8A according to the third embodiment. FIG. 17 illustrates a view of the fork insertion hole 8 as viewed obliquely from below. FIG. 18 illustrates an example of a block diagram illustrating a control system for detecting a fork insertion hole.

As illustrated in FIG. 17, the insertion port 8a serving as an entrance for the fork 3 in the fork insertion hole 8 of the pallet P has, for example, a horizontally long rectangular shape with long sides extending along the left-right direction (Z-axis direction).

The fork 3 includes a fork-side communication unit 81 near the distal end portion of the fork 3. The pallet P includes a pallet-side communication unit 82 near the insertion port 8a in the fork insertion hole 8 of the pallet P. The fork-side communication unit 81 and the pallet-side communication unit 82 can wirelessly communicate with each other. For example, the fork-side communication unit 81 and the pallet-side communication unit 82 perform short-range communication such as infrared communication.

The fork-side communication unit 81 and the pallet-side communication unit 82 constitute a part of the fork insertion hole detection unit 8A.

As illustrated in FIG. 18, the fork insertion hole detection unit 8A includes a fork-side communication unit 81, a pallet-side communication unit 82, a situation detection sensor 5, and a control unit 12 of the control device 10. In the fork insertion hole detection unit 8A, when the fork 3 approaches the fork insertion hole 8 of the pallet P to a distance at which the fork-side communication unit 81 and the pallet-side communication unit 82 can communicate with each other, communication is started between the fork-side communication unit 81 and the pallet-side communication unit 82.

In the fork insertion hole detection unit 8A, the fork-side communication unit 81 and the pallet-side communication unit 82 communicate with each other, whereby the control unit 12 detects a position of the fork insertion hole 8 from a detection result of the situation detection sensor 5. In the fork insertion hole detection unit 8A, for example, communication is performed until the fork 3 comes into a posture facing the fork insertion hole 8, and when the fork 3 comes into the posture facing the fork insertion hole 8, the position of the fork insertion hole 8 is detected by the situation detection sensor 5. Then, the control device 10 automatically controls the traveling vehicle body 2 and the fork 3 as the fork insertion hole 8 is detected by the fork insertion hole detection unit 8A.

According to such a configuration, by detecting the fork insertion hole 8 by the fork insertion hole detection unit 8A, the fork 3 can easily find the fork insertion hole 8, and the fork 3 can be inserted into the fork insertion hole 8 more accurately and easily.

In addition, the fork insertion hole 8 can be detected by communication between the fork-side communication unit 81 and the pallet-side communication unit 82.

Next, a control system 200 for a forklift according to a modification of the third embodiment will be described with reference to FIG. 19. FIG. 19 is a view illustrating a fork insertion hole detection unit 8B according to a first modification of the third embodiment. FIG. 19 illustrates a view of the fork insertion hole 8 as viewed obliquely from below.

As illustrated in FIG. 19, the pallet P includes marks 83 provided on an outer peripheral portion of the insertion port 8a for inserting the fork 3 in the fork insertion hole 8. The marks 83 are provided at four corners of the insertion port 8a having a horizontally long rectangular shape. The marks 83 clarify the shape of the insertion port 8a by indicating the four corners of the insertion port 8a.

The marks 83 provided at the four corners of the insertion port 8a constitute a part of the fork insertion hole detection unit 8B.

Since the fork insertion hole detection unit 8B includes the marks 83 provided in the insertion port 8a of the fork insertion hole 8 in the pallet P, the control unit 12 detects a position of the fork insertion hole 8 from a detection result of the situation detection sensor 5 (the processing in step S106 of FIG. 6). The fork insertion hole detection unit 8B detects the position of the fork insertion hole 8 from an image captured by the situation detection sensor 5 such as a camera. Then, the control device 10 automatically controls the traveling vehicle body 2 and the fork 3 as the fork insertion hole 8 is detected by the fork insertion hole detection unit 8B.

According to such a configuration, the situation detection sensor 5 such as a camera can easily recognize the insertion port 8a from the marks 83 formed on the outer peripheral portion of the insertion port 8a, thereby detecting the fork insertion hole 8 more accurately and easily.

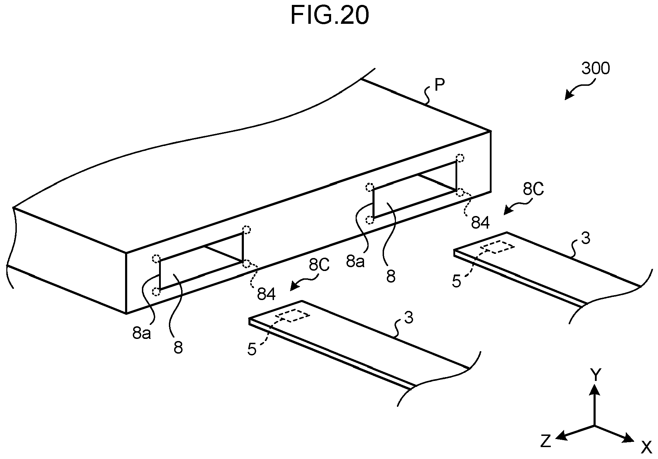

Next, a control system 300 for a forklift according to a modification of the third embodiment will be described with reference to FIG. 20. FIG. 20 is a view illustrating a fork insertion hole detection unit 8C according to a second modification of the third embodiment. FIG. 20 illustrates a view of the fork insertion hole 8 as viewed obliquely from below.

As illustrated in FIG. 20, the pallet P includes light emitting units 84 that emit light, the light emitting units 84 being provided on an outer peripheral portion of the insertion port 8a for inserting the fork 3 in the fork insertion hole **8.** The light emitting units 84 are provided at four corners of the insertion port 8a having a horizontally long rectangular shape. The light emitting units 84 are, for example, light-emitting diode (LED) lamps. The light emitting units 84 clarify the shape of the insertion port 8a by emitting light at the four corners of the insertion port 8a.

The light emitting units 84 provided at the four corners of the insertion port 8a constitute a part of the fork insertion hole detection unit 8C.

Since the fork insertion hole detection unit 8C includes the light emitting units 84 provided in the insertion port 8a of the fork insertion hole 8 in the pallet P, the control unit 12 detects a position of the fork insertion hole 8 from a detection result of the situation detection sensor 5. The fork insertion hole detection unit 8C detects the position of the fork insertion hole 8 from an image captured by the situation detection sensor 5 such as a camera. Then, the control device 10 automatically controls the traveling vehicle body 2 and the fork 3 as the fork insertion hole 8 is detected by the fork insertion hole detection unit 8C.

According to such a configuration, the situation detection sensor 5 such as a camera can easily recognize the insertion port 8a from light of the light emitting units 84 formed on the outer peripheral portion of the insertion port 8a, thereby detecting the fork insertion hole 8 more accurately and easily.

### (Fourth Embodiment)

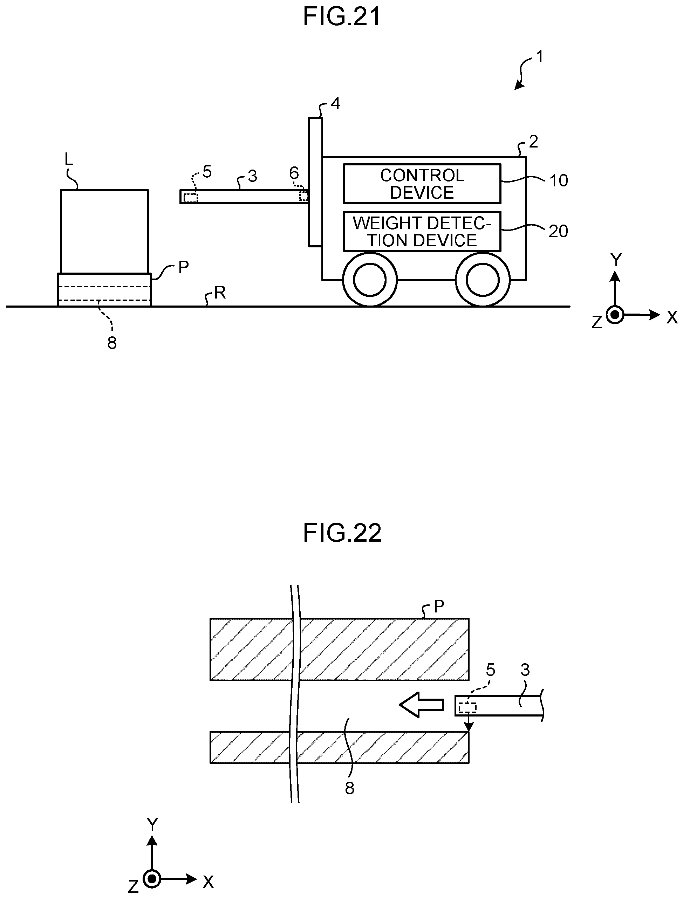

A forklift 1 according to the fourth embodiment will be described with reference to FIGS. 21 to 24. FIG. 21 is a diagram illustrating an outline of the forklift 1 according to the fourth embodiment. Note that the description of the configuration that is the same as that in each of the above-described embodiments will be omitted.

As illustrated in FIG. 21, the forklift 1 according to the fourth embodiment includes a traveling vehicle body 2, a fork 3, a lifting unit 4, a situation detection sensor 5, a load sensor 6, a control device 10, and a weight detection device 20. Since the traveling vehicle body 2, the fork 3, the lifting unit 4, the situation detection sensor 5, the load sensor 6, the control device 10, and the weight detection device 20 have the same configurations as those in the first embodiment, the description thereof will be omitted. In addition, FIG. 21 illustrates a state in which a loaded object L is placed on the pallet P.

FIG. 22 is a view illustrating an example in which a situation is detected at the distal end of the fork 3 according to the fourth embodiment. FIG. 22 illustrates schematic cross sections of the pallet P and the fork 3 inserted into the fork insertion hole 8 of the pallet P as viewed from the side (from the positive direction of the Z axis).

As illustrated in FIG. 22, when the fork 3 is inserted into the fork insertion hole 8 of the pallet P, the control device 10 detects that the distal end portion of the fork 3 has been inserted into the fork insertion hole 8 based on a sensing result of the situation detection sensor 5.

In the example of FIG. 22, the situation detection sensor 5 detects a situation below the fork 3. For example, it is assumed that the situation detection sensor 5 is a lidar, a radar device, or the like, and detects information about a target around the fork 3.

In this case, when the fork 3 is inserted into the fork insertion hole 8 of the pallet P, for example, the sensing result of the situation detection sensor 5 changes from the road surface R to the pallet P. When the situation detection sensor 5 detects the pallet P, the detection unit 131 of the control device 10 determines that the distal end portion of the fork 3 has been inserted into the fork insertion hole 8.

Alternatively, in a case where the situation detection sensor 5 is a camera, the detection unit 131 of the control unit 12 determines that the distal end portion of the fork 3 has been inserted into the fork insertion hole 8 when an area of the pallet P included in a captured image (hereinafter, also referred to as a pallet area) is equal to or greater than an insertion threshold value.

For example, the detection unit 131 specifies the pallet area included in the captured image based on the color of the pallet P. For example, when the ratio of the pallet area in the captured image is equal to or greater than the insertion threshold value, the detection unit 131 determines that the distal end portion of the fork 3 has been inserted into the fork insertion hole 8.

At this time, the detection unit 131 may detect an edge of the pallet area. For example, the detection unit 131 can determine whether the fork 3 has been inserted horizontally with respect to the longitudinal direction of the fork insertion hole 8 of the pallet P, depending on the inclination of the edge.

When the fork 3 is not inserted horizontally with respect to the longitudinal direction of the fork insertion hole 8, the operation control unit 122 controls the forklift 1 such that the fork 3 is inserted horizontally with respect to the longitudinal direction of the fork insertion hole 8. Accordingly, the forklift 1 can lift the pallet P more safely.

Next, the detection unit 131 that has detected that the distal end portion of the fork 3 has been inserted into the fork insertion hole 8 determines whether the distal end portion is coming out of (has protruded from) the fork insertion hole 8.

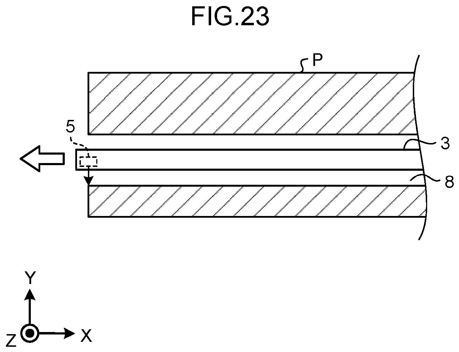

FIG. 23 is a view illustrating another example in which a situation is detected at the distal end of the fork 3 according to the fourth embodiment. FIG. 23 illustrates schematic cross sections of the pallet P and the fork 3 inserted into the fork insertion hole 8 of the pallet P as viewed from the side (from the positive direction of the Z axis).

As illustrated in FIG. 23, when the fork 3 comes out of the fork insertion hole 8 of the pallet P, the control device 10 detects that the distal end portion of the fork 3 has come out of the fork insertion hole 8 based on a sensing result of the situation detection sensor 5.

For example, it is assumed that the situation detection sensor 5 is a lidar, a radar device, or the like, and detects information about a target below the fork 3. In this case, when the fork 3 comes out of the fork insertion hole 8 of the pallet P, for example, the sensing result of the situation detection sensor 5 changes from the pallet P to the road surface R. When the situation detection sensor 5 detects the road surface R, the detection unit 131 determines that the distal end portion of the fork 3 has come out of the fork insertion hole 8.

Alternatively, in a case where the situation detection sensor 5 is a camera, the detection unit 131 determines that the distal end portion of the fork 3 has come out of the fork insertion hole 8 when an area of the pallet P included in a captured image (hereinafter, also referred to as a pallet area) is equal to or smaller than a protrusion threshold value.

For example, the detection unit 131 specifies the pallet area included in the captured image based on the color of the pallet P. For example, when the ratio of the pallet area in the captured image is equal to or smaller than the protrusion threshold value, the detection unit 131 determines that the distal end portion of the fork 3 has come out of the fork insertion hole 8.

At this time, the detection unit 131 may detect an edge of the pallet area. For example, the detection unit 131 can determine whether the fork 3 has been inserted horizontally with respect to the longitudinal direction of the fork insertion hole 8 of the pallet P, depending on the inclination of the edge.

When the fork 3 is not inserted horizontally with respect to the longitudinal direction of the fork insertion hole 8, the operation control unit 122 controls the forklift 1 such that the fork 3 is inserted horizontally with respect to the longitudinal direction of the fork insertion hole 8. Accordingly, the forklift 1 can lift the pallet P more safely.

Here, in order for the forklift 1 to safely transport the loaded object L, it is important to lift the pallet P more stably. Even if the distal end portion of the fork 3 does not come out of the fork insertion hole 8 of the pallet P, the forklift 1 can lift the pallet P. However, in a case where the distal end portion of the fork 3 comes out of the fork insertion hole 8 of the pallet P, the forklift 1 can lift the pallet P more safely as compared with a case where the distal end portion of the fork 3 does not come out of the fork insertion hole 8 of the pallet P. This is because, when the distal end portion of the fork 3 comes out of the fork insertion hole 8 of the pallet P, an area of the fork 3 that comes into contact with the pallet P increases, so that the fork 3 can more stably support the pallet P. Therefore, when the fork 3 lifts the pallet P in a state where the distal end portion of the fork 3 comes out of the fork insertion hole 8 of the pallet P, the forklift 1 can more safely transport the loaded object L.

Note that the determination made by the detection unit 131 is not limited to the above-described example. For example, the detection unit 131 may determine whether the distal end portion of the fork 3 is inserted into the fork insertion hole 8 or whether the distal end portion of the fork 3 comes out of the fork insertion hole 8, depending on a difference in brightness around the distal end portion of the fork 3.

For example, when a captured image is dark, more specifically, when an average luminance value of the captured image is smaller than a luminance threshold, the detection unit 131 determines that the distal end portion of the fork 3 has been inserted into the fork insertion hole 8.

For example, when the captured image is bright, more specifically, when the average luminance value of the captured image is equal to or greater than the luminance threshold, the detection unit 131 determines that the distal end portion of the fork 3 is coming out of the fork insertion hole 8.

Here, the detection unit 131 determines whether the periphery of the distal end portion of the fork 3 is bright using the image captured by the camera. However, the method by which the detection unit 131 determines the brightness is not limited thereto. For example, in a case where the situation detection sensor 5 is a luminance sensor, the detection unit 131 determines whether the periphery of the distal end portion of the fork 3 is bright depending on a brightness detected by the luminance sensor.

For example, when the periphery of the distal end portion of the fork 3 is dark, more specifically, when a detection result (luminance value) of the luminance sensor is smaller than a threshold value, the detection unit 131 determines that the distal end portion of the fork 3 has been inserted into the fork insertion hole 8.

For example, when the periphery of the distal end portion of the fork 3 is bright, more specifically, when the detection result (luminance value) of the luminance sensor is the threshold or more, the detection unit 131 determines that the distal end portion of the fork 3 is coming out of the fork insertion hole 8.

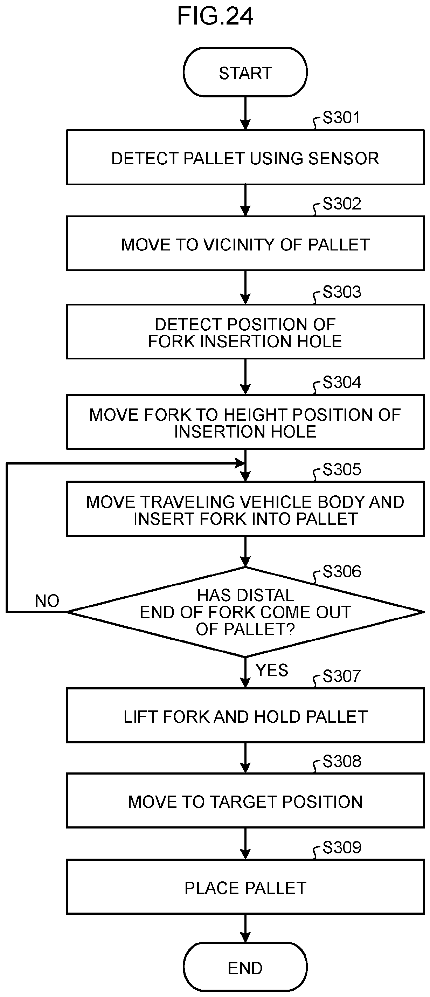

FIG. 24 is a flowchart illustrating examples of procedures of processing executed by the control device 10 according to the fourth embodiment.

The control unit 12 of the control device 10 detects the pallet P using the situation detection sensor 5 (step S301). Subsequently, the control unit 12 controls the traveling vehicle body 2 to move the traveling vehicle body 2 to the vicinity of the pallet P (step S302).

Next, the control unit 12 detects a position of the fork insertion hole 8 of the pallet P (step S303), and controls the lifting unit 4 to move the fork 3 to a height position of the fork insertion hole 8 (step S304).

The control unit 12 moves the traveling vehicle body 2 and inserts the fork 3 into the pallet P (step S305). The control unit 12 determines whether the distal end of the fork 3 has come out of the pallet P (step S306).

When the distal end of the fork 3 does not come out of the pallet P (step S306; No), the control unit 12 returns to step S305 and inserts the fork 3 into the pallet P. On the other hand, when the distal end of the fork 3 has come out of the pallet P (step S306; Yes), the lifting unit 4 is controlled to lift the fork 3 and lift the pallet P (step S307).

The control unit 12 controls the traveling vehicle body 2 to move the traveling vehicle body 2 to a target position in a state where the pallet P is lifted (step S308). The control unit 12 controls the lifting unit 4 at the target position to lower the fork 3 and place the pallet P (step S309), and ends the processing.

### (Fifth Embodiment)

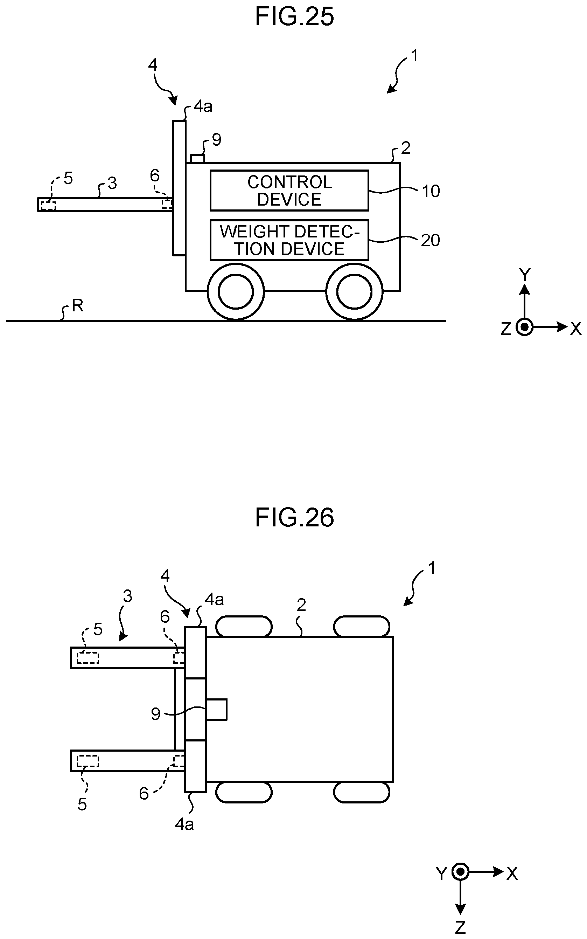

A forklift 1 according to the fifth embodiment will be described with reference to FIGS. 25 to 27. FIG. 25 is a schematic side view of the forklift according to the fifth embodiment. FIG. 26 is a schematic plan view of the forklift 1 according to the fifth embodiment. Note that the description of the configuration that is the same as that in each of the above-described embodiments will be omitted.

The forklift 1 includes a traveling vehicle body 2, a fork 3, a lifting unit 4, a first detection sensor 9, a load sensor 6, a second detection sensor 5, a control device 10, and a weight detection device 20. Since the traveling vehicle body 2, the fork 3, the lifting unit 4, the load sensor 6, the control device 10, and the weight detection device 20 have the same configurations as those in the above-described embodiments, the description thereof will be omitted.

The first detection sensor 9 is provided on the traveling vehicle body 2. The first detection sensor 9 acquires information on a situation around the traveling vehicle body 2. The first detection sensor 9 acquires at least information on a situation on the front side (in the negative direction of the X axis) of the traveling vehicle body 2. The first detection sensor 9 is provided to acquire information on the situation on the front side of the traveling vehicle body 2, for example, from between a pair of support columns 4a. The first detection sensor 9 may acquire information on a situation on the lateral side (Z-axis) of the traveling vehicle body 2.

The first detection sensor 9 is, for example, a camera. The camera is attached to the traveling vehicle body 2 to be able to capture the vicinity of the front of the traveling vehicle body 2. The camera includes an imaging element such as a charge coupled device (CCD) or a complementary metal oxide semiconductor (CMOS), and a lens. The first detection sensor 9 may include at least one of a solid-state light detection and ranging (LiDAR), a multicolor laser coaxial displacement meter, or various other sensors. The first detection sensor 9 may include a motion processing unit (MoPU). The MoPU is a unit that detects a motion using a high-resolution camera. From an image of an object captured at a frame rate of, for example, 1000 frames/second or more, the MoPU outputs motion information indicating a motion of the captured object at a frame rate of, for example, 1000 frames/second or more. Furthermore, vector information of a motion of a point indicating a position where the object exists along a predetermined coordinate axis is output as the motion information. That is, the motion information output from the MoPU does not include information necessary for identifying what the captured object is (e.g., whether the captured object is a person or an obstacle), and includes only information indicating a motion (a moving direction and a moving speed) of the center point (or the center of gravity) of the object on the coordinate axes (x axis, y axis, and z axis).

The second detection sensor 5 (situation detection sensor 5) is provided in the fork 3. The second detection sensor 5 is provided in front of the first detection sensor 9. The second detection sensor 5 acquires information on a situation around the traveling vehicle body 2. The second detection sensor 5 acquires at least information on a situation on the front side of the fork 3. The second detection sensor 5 may acquire information on a situation to at least one of the lateral side of the fork 3 and the lower side of the fork 3.

The second detection sensor 5 is, for example, a camera. Similarly to the first detection sensor 9, the second detection sensor 5 may be a solid-state LiDAR or the like. The second detection sensor 5 may be a sensor having a lower detection accuracy than the first detection sensor 9. For example, the second detection sensor 5 may be a camera having a smaller number of pixels than the first detection sensor 9.

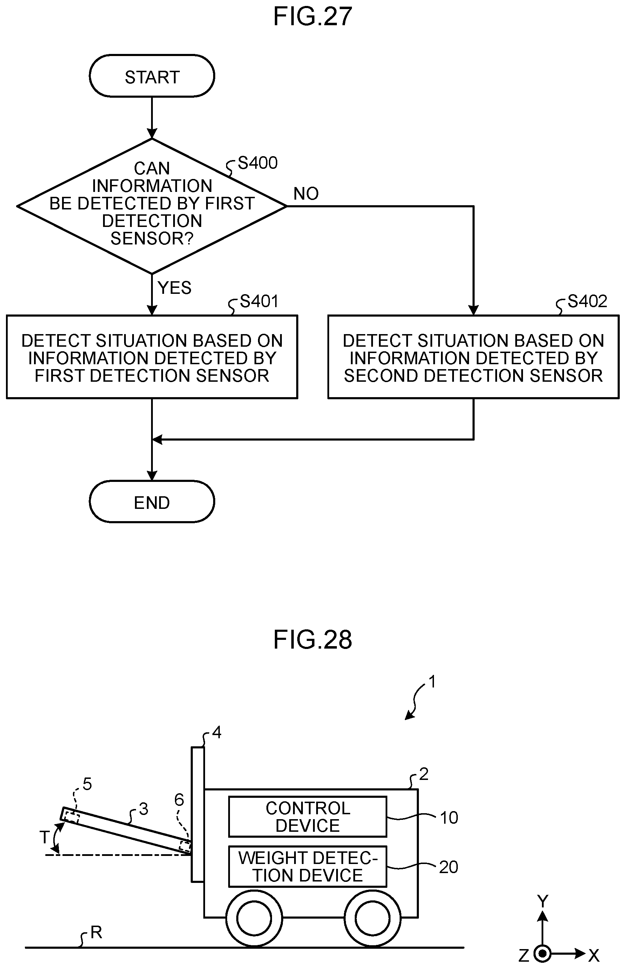

Next, detection processing according to the fifth embodiment will be described with reference to a flowchart of FIG. 27. FIG. 27 is a flowchart for explaining the detection processing according to the fifth embodiment. The detection processing is processing of switching a detection sensor used for controlling the traveling of the traveling vehicle body 2.

The control device 10 determines whether a situation ahead of the traveling vehicle body 2 can be detected by the first detection sensor 9 (step S400). For example, the control device 10 determines whether a distance to a target detected by the first detection sensor 9 is equal to or smaller than a predetermined distance set in advance. When the distance to the target detected by the first detection sensor 9 is equal to or smaller than the predetermined distance set in advance, the control device 10 determines that a situation ahead of the traveling vehicle body 2 cannot be detected by the first detection sensor 9. When the distance to the target detected by the first detection sensor 9 is larger than the predetermined distance set in advance, the control device 10 determines that a situation ahead of the traveling vehicle body 2 can be detected by the first detection sensor 9.

When a situation ahead of the traveling vehicle body 2 can be detected by the first detection sensor 9 (step S400: Yes), the control device 10 detects a surrounding situation ahead of the traveling vehicle body 2 based on information detected by the first detection sensor 9 (step S401).

When a situation ahead of the traveling vehicle body 2 cannot be detected by the first detection sensor 9 (step S400: No), the control device 10 detects a surrounding situation ahead of the traveling vehicle body 2 based on information detected by the second detection sensor 5 (step S402).

When the surrounding situation ahead of the traveling vehicle body 2 is detected based on the information detected by the second detection sensor 5, the control device 10 may correct the information detected by the second detection sensor 5 according to the height of the fork 3. The height of the fork 3 is detected, for example, by the second detection sensor 5. The height of the fork 3 may be detected based on a current lifting position of the fork 3, for example, a value of a control signal for the lifting unit 4 to control the fork 3. Further, a sensor that detects a height of the fork 3 may be provided.

For example, the control device 10 corrects the information detected by the second detection sensor 5 by calculating a distance from the distal end of the fork 3 to the target based on an attachment angle of the second detection sensor 5 with respect to the fork 3 and the height of the fork 3. The attachment angle is a preset angle. For example, when the second detection sensor 5 (e.g., the optical axis of the lens of the camera) is attached obliquely downward, the control device 10 calculates a distance between the distal end of the fork 3 and the target in the horizontal direction according to the attachment angle (e.g., the optical axis of the lens of the camera with respect to the fork 3), the distance to the target calculated using the information of the second detection sensor 5, and the height of the fork 3.

Accordingly, the forklift 1 can further suppress a contact between the forklift 1 and the target.

### (Sixth Embodiment)

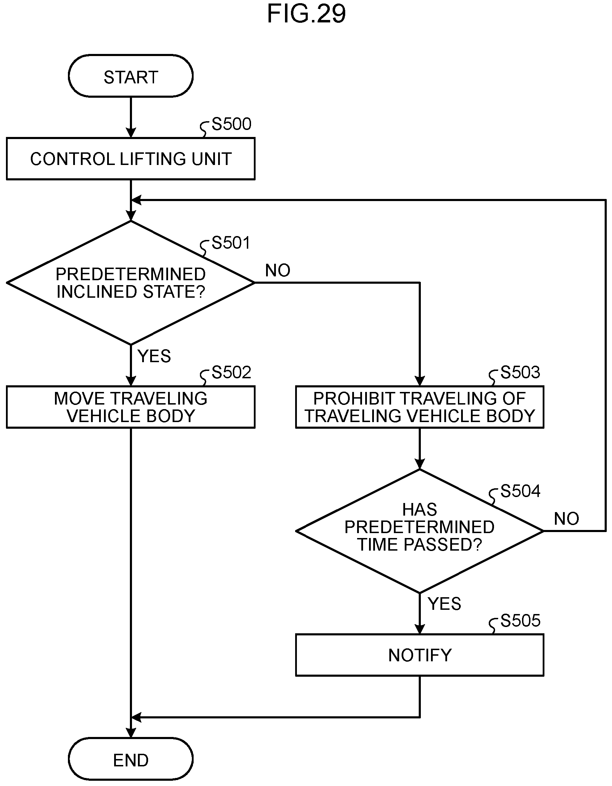

A forklift 1 according to the sixth embodiment will be described with reference to FIGS. 28 and 29. FIG. 28 is a view illustrating a state in which the fork according to the sixth embodiment is inclined upward. Note that the description of the configuration that is the same as that in each of the above-described embodiments will be omitted.

As illustrated in FIG. 28, the lifting unit 4 changes an inclined state of the fork 3. The lifting unit 4 changes the inclined state of the fork 3 by pivoting the fork 3 about the proximal end side of the fork 3. The inclined state of the fork 3 includes an inclination angle T of the fork 3. For example, as illustrated in FIG. 28, the inclination angle T of the fork 3 is an inclination angle in the vertical direction with the horizontal direction as a reference angle.

The lifting unit 4 may change the inclined state of the fork 3 integrally with a part of the lifting unit 4. For example, the lifting unit 4 includes a fixed portion and an inclined portion. The inclined portion is integrated with the fork 3 and is configured to pivot with respect to the fixed portion. The inclination angle of the fork 3 may be an inclination angle with respect to the fixed portion.

The detection unit 121 detects an inclination of the fork 3. The detection unit 121 detects the inclination of fork 3 based on a captured image and information about a target. For example, the detection unit 121 detects the inclination of fork 3 based on a change in the position of the target in the captured image. The detection unit 121 calculates the inclination angle T of the fork 3, for example, based on the distance to the target and the change in the vertical position of the target in the captured image. For example, the detection unit 121 detects the inclination of the fork 3 based on images captured before and after a signal for inclining the fork 3 is output by the operation control unit 122. The detection unit 121 detects the inclination of the fork 3 using the image captured before the signal for inclining the fork 3 is output by the operation control unit 122 and the image captured after the signal for inclining the fork 3 is output by the operation control unit 122.

The detection unit 121 determines whether the fork 3 is inclined in a predetermined inclined state in a state where a loaded object is placed on the fork 3.

The predetermined inclined state is a state set in advance. The predetermined inclined state is a state in which the distal end portion of the fork 3 is located above the proximal end portion of the fork 3. When transporting a loaded object, the forklift 1 inclines the fork 3 such that the distal end portion of the fork 3 is located above the proximal end portion of the fork 3 so that the pallet and the loaded object do not fall from the fork 3. The predetermined inclined state is a state in which the fork 3 is inclined so that the pallet does not fall from the fork 3.

When the inclination angle T of the fork 3 is equal to or greater than a predetermined angle, the detection unit 121 determines that the fork 3 is inclined in the predetermined inclined state. When the inclination angle T of the fork 3 is smaller than the predetermined angle, the detection unit 121 determines that the fork 3 is not inclined in the predetermined inclined state.

After the pallet is lifted, the operation control unit 122 controls the lifting unit 4 such that the fork 3 becomes inclined in the predetermined inclined state. The operation control unit 122 outputs a signal for controlling the lifting unit 4 to the lifting unit 4 such that the fork 3 is in the predetermined inclined state.

When the fork 3 is inclined in the predetermined inclined state, the operation control unit 122 automatically calculates a route (e.g., the shortest distance route) to a target position where the pallet is to be placed. Then, the operation control unit 122 controls the traveling vehicle body 2 to move to the target position along the route, and after traveling vehicle body 2 arrives at the target position, the operation control unit 122 controls the lifting unit 4 to place the pallet at the target position. Then, after the pallet is placed, the operation control unit 122 specifies a pallet to be transported next and transport the pallet in sequence.

When the fork 3 is not inclined in the predetermined inclined state after the pallet is lifted, the operation control unit 122 prohibits the traveling of the traveling vehicle body 2. The operation control unit 122 prohibits the traveling of the traveling vehicle body 2 until the fork 3 becomes inclined in the predetermined inclined state.

After outputting the signal for controlling the lifting unit 4 to the lifting unit 4 so that the fork 3 becomes inclined in the predetermined inclined state, the operation control unit 122 prohibits the traveling of the traveling vehicle body 2 until the fork 3 becomes inclined in the predetermined inclined state. After outputting the signal for controlling the lifting unit 4 to the lifting unit 4 so that the fork 3 becomes inclined in the predetermined inclined state, the operation control unit 122 starts the traveling of the traveling vehicle body 2 when the fork 3 becomes inclined in the predetermined inclined state.

The operation control unit 122 measures a time after outputting the signal for controlling the lifting unit 4 to the lifting unit 4. When the fork 3 is not inclined in the predetermined inclined state even after the measured time reaches a predetermined time, the operation control unit 122 detects an abnormality in the lifting unit 4. When detecting the abnormality in the lifting unit 4, the operation control unit 122 notifies the occurrence of the abnormality. For example, the operation control unit 122 notifies the occurrence of the abnormality by turning on a lamp. Note that the method of notifying the occurrence of the abnormality is not limited thereto. The occurrence of the abnormality may be notified by sound. The operation control unit 122 may transmit a signal related to the occurrence of the abnormality to a server device that manages the forklift 1.

When the fork 3 is no longer inclined in the predetermined inclined state while the traveling vehicle body 2 is moving to the target position, the operation control unit 122 may prohibit the traveling of the traveling vehicle body 2. When the fork 3 is no longer inclined in the predetermined inclined state while the traveling vehicle body 2 is moving to the target position, for example, the operation control unit 122 decelerates the traveling vehicle body 2 and stops the traveling vehicle body 2.

Next, travel permission processing according to the sixth embodiment will be described with reference to a flowchart of FIG. 29. FIG. 29 is a flowchart for explaining the travel permission processing according to the embodiment. Here, it is assumed that a pallet to be transported is specified and the fork 3 is inserted into the fork insertion hole of the pallet.

The control device 10 controls the lifting unit 4 (step S500). Specifically, the control device 10 controls the lifting unit 4 such that the pallet is lifted by the fork 3 and the fork 3 becomes inclined in the predetermined inclined state.

The control device 10 determines whether the fork 3 is inclined in the predetermined inclined state (step S501). Specifically, the control device 10 determines whether an inclination angle T of the fork 3 is equal to or greater than a predetermined angle.

When the fork 3 is inclined in the predetermined inclined state (step S501: Yes), specifically, when the inclination angle T of the fork 3 is equal to or greater than the predetermined angle, the control device 10 moves the traveling vehicle body 2 to a target position (step S502).

When the fork 3 is not inclined in the predetermined inclined state (step S501: No), specifically, when the inclination angle T of the fork 3 is smaller than the predetermined angle, the control device 10 prohibits the traveling of the traveling vehicle body 2 (step S503).

The control device 10 determines whether a measurement time after outputting a signal for controlling the lifting unit 4 to the lifting unit 4 has passed a predetermined time (step S504). Specifically, the control device 10 determines whether a measurement time after outputting a signal for controlling the lifting unit 4 to incline the fork 3 to the lifting unit 4 exceeds a predetermined time. When the measurement time does not exceed the predetermined time (step S504: No), the control device 10 returns to step S501 and repeats the above-described processing.

When the measurement time exceeds the predetermined time (step S504: Yes), the control device 10 notifies an abnormality of the lifting unit 4 (step S505). That is, even though the control device 10 outputs a signal for controlling the lifting unit 4 such that the fork 3 becomes inclined in the predetermined inclined state, when a time during which the fork 3 is not inclined in the predetermined inclined state is equal to or larger than the predetermined time, an abnormality of the lifting unit 4 is notified.

The control device 10 may set the predetermined inclined state, depending on at least one of the weight of the loaded object placed on the fork 3, the height of the fork 3, and the traveling speed of the traveling vehicle body 2. Specifically, the control device 10 sets the predetermined angle, depending on at least one of the weight of the loaded object placed on the fork 3, the height of the fork 3, and the traveling speed of the traveling vehicle body 2. For example, the control device 10 increases the predetermined angle as the weight of the loaded object increases. In addition, the control device 10 increases the predetermined angle as the height of the fork 3 increases. In addition, the control device 10 increases the predetermined angle as the traveling speed of the traveling vehicle body 2 increases. The traveling speed is, for example, an upper limit traveling speed of the traveling vehicle body 2. The upper limit traveling speed may be set in advance, or may be set depending on the type of the loaded object, the weight of the loaded object, and the like.

As a result, the forklift 1 can suppress the loaded object from falling off the fork 3 during traveling.

Further, the control device 10 may determine whether the inclination angle T of the fork 3 is a reference angle. In other words, the control device 10 may determine whether the fork 3 is in a state along the horizontal direction. The inclination of the fork 3 may include a state in which the inclination angle T of the fork 3 is a reference angle. When the traveling speed of the traveling vehicle body 2 is low, for example, when the traveling speed of the traveling vehicle body 2 is equal to or lower than a safety speed set in advance, the forklift 1 may travel with the inclination angle T of the fork 3 as a reference angle. The safe speed is, for example, a speed at which the pallet does not fall from the fork 3 even when the inclination angle of the fork 3 is a reference angle.

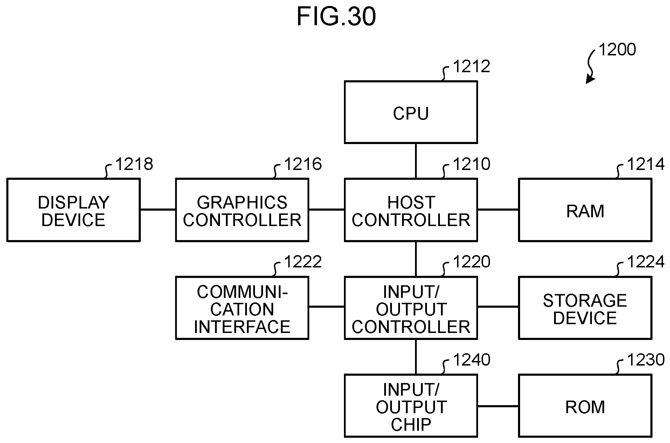

Next, hardware configurations of the control device 10 and the weight detection device 20 will be described with reference to FIG. 30. FIG. 30 is a diagram schematically illustrating an example of a hardware configuration of a computer 1200 that functions as the control device 10 and/or the weight detection device 20. Programs installed in the computer 1200 can cause the computer 1200 to function as one or more "units" of the device according to the present embodiment, or cause the computer 1200 to execute operations associated with the device according to the present embodiment or one or more "units" of the device according to the present embodiment, and/or cause the computer 1200 to execute a process according to the present embodiment or stages of the process. Such programs may be executed by a CPU 1212 to cause the computer 1200 to execute specific operations associated with some or all of the blocks in the flowcharts and block diagrams illustrated herein.

The computer 1200 according to the present embodiment includes a CPU 1212, a RAM 1214, and a graphics controller 1216, which are connected to each other by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes input/output units such as a ROM 1230 and a keyboard, which are connected to the input/output controller 1220 via an input/output chip 1240.

The CPU 1212 operates according to programs stored in the ROM 1230 and the RAM 1214, thereby controlling each unit. The graphics controller 1216 acquires image data generated by the CPU 1212 in a frame buffer or the like provided in the RAM 1214 or in the RAM 1214 itself, and causes the image data to be displayed on a display device 1218.

The communication interface 1222 communicates with other electronic devices via a network. The storage device 1224 stores programs and data used by the CPU 1212 in the computer 1200. The DVD drive reads programs or data from the DVD-ROM or the like and provides the programs or data to the storage device 1224. The IC card drive reads programs and data from the IC card and/or writes programs and data to the IC card.

The ROM 1230 stores therein a boot program or the like executed by the computer 1200 when activated, and/or programs dependent on the hardware of the computer 1200. The input/output chip 1240 may also connect various input/output units to the input/output controller 1220 via a USB port, a parallel port, a serial port, a keyboard port, a mouse port, and the like.

Programs are provided by a computer-readable storage medium such as a DVD-ROM or an IC card. The programs are read from the computer-readable storage medium, installed in the storage device 1224, the RAM 1214, or the ROM 1230, which is also an example of the computer-readable storage medium, and executed by the CPU 1212. The information processing described in these programs is read by the computer 1200 and brings about cooperation between the programs and the various types of hardware resources described above. The device or method may be configured by implementing the operation or processing of information according to the use of the computer 1200.

For example, when communication is performed between the computer 1200 and an external device, the CPU 1212 may execute a communication program loaded into the RAM 1214 and instruct the communication interface 1222 to perform communication processing based on the processing described in the communication program. Under the control of the CPU 1212, the communication interface 1222 reads transmission data stored in a transmission buffer area provided in the recording medium such as the RAM 1214, the storage device 1224, the DVD-ROM, or the IC card, and transmits the read transmission data to the network, or writes reception data received from the network to a reception buffer area or the like provided on the recording medium.

In addition, the CPU 1212 may cause the RAM 1214 to read all or necessary portions of files or databases stored in the external recording medium such as the storage device 1224, the DVD drive (DVD-ROM), or the IC card, and may execute various types of processing on data on the RAM 1214. Next, the CPU 1212 may write back the processed data to the external recording medium.

Various types of information such as various types of programs, data, tables, and databases may be stored in the recording medium and subjected to information processing. The CPU 1212 may execute various types of processing on the data read from the RAM 1214, the various types of processing including various types of operations, information processing, conditional determination, conditional branching, unconditional branching, information search/replacement, and the like, which are described throughout the present disclosure and specified by an instruction sequence of a program, and writes back the results to the RAM 1214. In addition, the CPU 1212 may search for information in files, databases, or the like in the recording medium. For example, in a case where a plurality of entries, each having an attribute value of a first attribute associated with an attribute value of a second attribute, are stored in the recording medium, the CPU 1212 may search for an entry of which the attribute value of the first attribute matches the specified condition from among the plurality of entries, and read the attribute value of the second attribute stored in the entry, thereby acquiring the attribute value of the second attribute associated with the first attribute satisfying the predetermined condition.

The programs or software modules described above may be stored in the computer-readable storage medium on the computer 1200 or near the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in the present embodiment may represent stages of a process in which operations are performed or "units" of a device that serves to perform operations. Specific stages and "units" may be implemented by dedicated circuits, programmable circuits provided with computer-readable instructions stored on the computer-readable storage medium, and/or processors provided with computer-readable instructions stored on the computer-readable storage medium. The dedicated circuits may include digital and/or analog hardware circuits, and may include integrated circuits (ICs) and/or discrete circuits. The programmable circuits may include reconfigurable hardware circuits including a logical AND, a logical OR, a logical XOR, a logical NAND, a logical NOR, and other logical operations, flip-flops, registers, and memory elements, such as field programmable gate arrays (FPGAs) and programmable logic arrays (PLAs).

The computer-readable storage medium may include any type of tangible device capable of storing instructions to be executed by a suitable device. As a result, the computer-readable storage medium having instructions stored thereon includes a product having instructions that may be executed to create a means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, and the like.

The computer-readable instructions may include assembler instructions, instruction-set-architecture (ISA) instructions, machine instructions, machine dependent instructions, microcode, firmware instructions, statesetting data, or either source code or object code written in any combination of one or more programming languages including object-oriented programming languages such as Smalltalk (registered trademark), JAVA (registered trademark), and C++, and conventional procedural programming languages such as a "C" programming language or similar programming languages.

The computer-readable instructions may be provided for a processor or a programmable circuit of a general purpose computer, a special purpose computer, or another programmable data processing device, either locally or through a local area network (LAN) or a wide area network (WAN) such as the Internet, such that the processor or programmable circuit of the general purpose computer, the special purpose computer, or another programmable data processing device executes the computer-readable instructions to create a means for performing the operations specified in the flowcharts or block diagrams. Examples of the processor include a computer processor, a processing unit, a microprocessor, a digital signal processor, a controller, a microcontroller, and the like.

As described above, a forklift 1 according to an embodiment includes a traveling vehicle body 2, a fork 3, and a sensor (a situation detection sensor 5). The fork 3 is provided in front of the traveling vehicle body 2, and has a recess 3a at least at a distal end portion. The sensor is accommodated in the recess 3a to detect a situation around the distal end portion.

With such a configuration, it is possible to more accurately grasp a situation at the distal end of the fork.

As described above, a weight detection device 20 according to an embodiment includes a detection unit 221, a specification unit 222, and an estimation unit 223. The detection unit 221 detects appearance information of a loaded object placed on a pallet to be inserted into a fork 3. The specification unit 222 specifies an exterior package other than a content in the loaded object based on the detected appearance information. The estimation unit 223 estimates a weight of the content based on the specified exterior package.

With such a configuration, it is possible to detect a weight of the content in the loaded object.

While the present invention has been described using the embodiments, the technical scope of the present invention is not limited to the scope described in the above-described embodiments. It is apparent to those skilled in the art that various modifications or improvements can be made to the above-described embodiments. It is also apparent from the claims that modes to which such modifications or improvements are added can also fall within the technical scope of the present invention.

It should be noted that the operations, procedures, steps, and stages in each process performed in the device, system, program, and method shown in the claims, the specification, and the drawings may be implemented in any order unless the order is not specifically defined by using term "prior to", "before", or the like, and unless the output of previous processing is used in later processing. Even if the operation flow in the claims, the specification, and the drawings is described using the terms "first", "next", and the like for convenience, this does not mean that it is essential to perform the operation flow in this order.

### Reference Signs List

1 FORKLIFT
2 TRAVELING VEHICLE BODY
3 FORK
3a RECESS
4 LIFTING UNIT
4a SUPPORT COLUMN
5 SITUATION DETECTION SENSOR (SECOND DETECTION SENSOR)
6 LOAD SENSOR
7 WINDOW
7a GLASS MEMBER
7b MESH MEMBER
8 FORK INSERTION HOLE
8A to 8C FORK INSERTION HOLE DETECTION UNIT
8a INSERTION PORT
9 FIRST DETECTION SENSOR
10 CONTROL DEVICE
11, 21 COMMUNICATION UNIT
12, 22 CONTROL UNIT
13, 23 STORAGE UNIT
20 WEIGHT DETECTION DEVICE
71 to 73 WINDOW
81 FORK-SIDE COMMUNICATION UNIT
82 PALLET-SIDE COMMUNICATION UNIT
83 MARK
84 LIGHT EMITTING UNIT
100, 200, 300 CONTROL SYSTEM
121 DETECTION UNIT
122 OPERATION CONTROL UNIT
131, 221 DETECTION UNIT
222 SPECIFICATION UNIT
223 ESTIMATION UNIT
224 STORAGE PROCESSING UNIT
231 ASSOCIATED INFORMATION
L LOADED OBJECT
P PALLET
R ROAD SURFACE

## Claims

1. A forklift comprising:
a traveling vehicle body;
a fork provided in front of the traveling vehicle body and having a recess at least at a distal end portion; and
a sensor accommodated in the recess to detect a situation around the distal end portion.

2. The forklift according to claim 1, wherein the recess has a shape in which a portion of the distal end portion on a side facing a road surface on which the traveling vehicle body travels is recessed.

3. The forklift according to claim 2, wherein
the distal end portion has an inclined surface in the portion on the side facing the road surface such that the fork becomes thinner toward a distal end, and
the recess has a shape in which at least a part of the inclined surface is recessed.

4. The forklift according to claim 2, wherein the recess has a recessed shape from the distal end portion to a proximal end portion toward the traveling vehicle body.

5. The forklift according to claim 1, wherein a distal end of the distal end portion is located in front of the sensor.

6. The forklift according to claim 1, further comprising:
a control device that automatically controls the traveling vehicle body and the fork, wherein
the control device detects a position of a fork insertion hole in a pallet based on information detected by the sensor, and automatically inserts the fork into the fork insertion hole.

7. The forklift according to claim 1, further comprising:
a window formed to be open at the distal end portion on at least one of an upper side and a lateral side of the sensor.

8. The forklift according to claim 7, wherein the window is covered with a glass member.

9. The forklift according to claim 7, wherein the window is covered with a mesh member.

10. The forklift according to any one of claims 7 to 9, wherein
a plurality of the forks are provided, and
the window is formed on each of side surfaces facing each other of the plurality of forks.

11. The forklift according to claim 1, further comprising:
a determination unit that determines whether the distal end portion of the fork has come out of a fork insertion hole provided in a pallet based on a sensing result of the sensor.

12. The forklift according to claim 11, wherein
the sensor includes a camera that captures a situation around the distal end portion and outputs an image, and
the determination unit determines that the distal end portion has come out of the fork insertion hole when a ratio of a pallet area included in the image to the image is equal to or smaller than a protrusion threshold value.

13. The forklift according to claim 12, wherein the determination unit determines that the distal end portion has come out of the fork insertion hole when the ratio of the pallet area to the image is equal to or smaller than the protrusion threshold value after the distal end portion is inserted into the fork insertion hole.

14. The forklift according to claim 11, wherein the determination unit determines whether the distal end portion of the fork has been inserted into the fork insertion hole.

15. The forklift according to claim 14, wherein
the sensor includes a camera that captures a situation around the distal end portion and outputs an image, and
the determination unit determines that the distal end portion has been inserted into the fork insertion hole when a ratio of a pallet area included in the image to the image is equal to or greater than an insertion threshold value.

16. The forklift according to claim 1, further comprising:
a control device that detects an inclination of the fork based on information detected by the sensor.

17. The forklift according to claim 16, wherein the control device prohibits the traveling vehicle body from traveling when the fork is not inclined in a predetermined inclined state in a state where a load is placed on the fork.

18. The forklift according to claim 17, wherein the control device sets the predetermined inclined state depending on at least one of a weight of the load placed on the fork, a height of the fork, and a traveling speed of the traveling vehicle body.

19. The forklift according to claim 16, wherein the control device controls the fork and the traveling vehicle body based on the information detected by the sensor.

20. A forklift comprising:
a traveling vehicle body;
a fork provided in front of the traveling vehicle body;
a first detection sensor provided in the traveling vehicle body;
a second detection sensor provided in the fork; and
a control device that detects a situation ahead of the traveling vehicle body based on information detected by at least one of the first detection sensor and the second detection sensor, wherein
when the situation ahead of the traveling vehicle body is not detectable based on the information detected by the first detection sensor due to a load placed on the fork, the control device detects the situation ahead of the traveling vehicle body based on the information detected by the second detection sensor.

21. The forklift according to claim 20, wherein the control device controls traveling of the traveling vehicle body based on the situation ahead of the traveling vehicle body.

22. The forklift according to claim 20, wherein when the situation ahead of the traveling vehicle body is detected by the second detection sensor, the control device corrects the information detected by the second detection sensor according to a height of the fork.

23. A control system for a forklift, the control system comprising:
a forklift including a traveling vehicle body, a fork provided in front of the traveling vehicle body and having a recess at least at a distal end portion, and a sensor accommodated in the recess to detect a situation around the distal end portion;
a pallet having a fork insertion hole into which the fork is inserted;
a fork insertion hole detection unit that detects the fork insertion hole; and
a control device that automatically controls the traveling vehicle body and the fork as the fork insertion hole is detected by the fork insertion hole detection unit.

24. The control system for a forklift according to claim 23, wherein the fork insertion hole detection unit includes a fork-side communication unit provided in the fork and a pallet-side communication unit provided in the pallet, and performs communication between the fork-side communication unit and the pallet-side communication unit.

25. The control system for a forklift according to claim 23, wherein the fork insertion hole detection unit includes a mark provided on an outer peripheral portion of an insertion port of the fork insertion hole.

26. The control system for a forklift according to claim 23, wherein the fork insertion hole detection unit includes a light emitting unit provided on an outer peripheral portion of an insertion port of the fork insertion hole to emit light.

27. A weight detection device comprising:
a detection unit that detects appearance information of a loaded object placed on a pallet to be inserted into a fork;
a specification unit that specifies an exterior package other than a content in the loaded object based on the detected appearance information; and
an estimation unit that estimates a weight of the content based on the specified exterior package.

28. The weight detection device according to claim 27, wherein
the detection unit
detects a load applied to the fork using a load sensor provided in the fork, and
the estimation unit
estimates a weight of the exterior package, and estimates a weight of the content based on the load and the weight of the exterior package.

29. The weight detection device according to claim 28, wherein
the detection unit
detects a weight of the pallet, and
the estimation unit
estimates the weight of the content by subtracting the weight of the pallet and the weight of the exterior package from the load.

30. The weight detection device according to claim 29, wherein
the detection unit
detects the weight of the pallet by detecting weight information written on the pallet using a sensor.

31. The weight detection device according to claim 30, wherein
the weight information
is code information in which information on the weight of the pallet is embedded.

32. The weight detection device according to claim 27, further comprising a storage processing unit that stores loaded object information related to the loaded object specified based on the appearance information and the estimated weight of the content in association with each other in a storage unit.

33. A weight detection method executed by a computer, the weight detection method comprising:
a detection step of detecting appearance information of a loaded object placed on a pallet to be inserted into a fork;
a specification step of specifying an exterior package other than a content in the loaded object based on the detected appearance information; and
an estimation step of estimating a weight of the content based on the specified exterior package.

34. A non-transitory computer-readable storage medium having stored therein a weight detection program causing a computer to execute a process comprising:
a detection procedure of detecting appearance information of a loaded object placed on a pallet to be inserted into a fork;
a specification procedure of specifying an exterior package other than a content in the loaded object based on the detected appearance information; and
an estimation procedure of estimating a weight of the content based on the specified exterior package.
